# EUROPEAN PATENT SPECIFICATION

(11) **EP 1 927 779 B1**
(45) Date of publication and mention of the grant of the patent: **07.04.2010**
(21) Application number: 07254661.7
(22) Date of filing: 30.11.2007
(51) Int. Cl.: F16D 65/097

(54) **Disc brake shim plate**
Scheibenbremsen-Abstandsscheibe
Plateau de calage de frein à disque

(30) Priority: 30.11.2006 JP 2006323710; 14.12.2006 JP 2006336785; 14.12.2006 JP 2006336786
(43) Date of publication of application: 04.06.2008
(60) Divisional application: 09169828.2
(73) Proprietor: Nissin Kogyo Co., Ltd., Ueda-shi, Nagano 386-8505 (JP)
(72) Inventor: Noguchi, Toru c/o Nissin Kogyo Co., Ltd, Nagano 386-8505 (JP); Magario, Akira c/o Nissin Kogyo Co, ltd, Nagano 386-8505 (JP)
(74) Representative: Brown, David Leslie

(56) References cited:
- EP-A- 1 455 109
- EP-A- 1 466 940

## Description

### BACKGROUND OF THE INVENTION

The present invention relates to a disc brake shim plate which prevents noise produced when applying a disc brake.

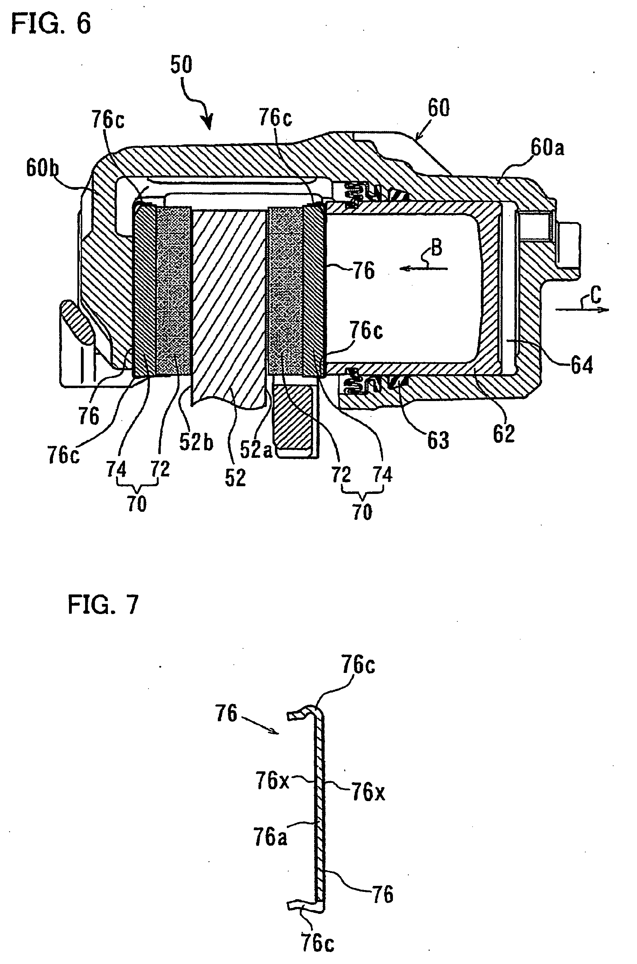

FIG. 6 shows an example of a disc brake used as a vehicular brake. A disc brake shim plate (hereinafter simply referred to as "shim plate") 76 such as a metal plate is disposed between a pad 70 and a piston 62 in order to prevent unusual sound (noise) produced when applying the disc brake. A vehicular disc brake 50 includes a caliper body 60 supported on the vehicle body. The caliper body 60 includes an action section 60a provided with a hydraulic chamber 64 formed therein and a reaction section 60b disposed opposite to the action section 60a through a disc rotor 52. The piston 62 is disposed in the hydraulic chamber 64. A brake fluid is liquid-tightly contained in the hydraulic chamber 64 using a piston seal 63.

A pair of pads 70 is disposed between the action section 60a and the reaction section 60b. The pair of pads 70 can be caused to come in pressure-contact with the pressure-contact surfaces (side surfaces) of the disc rotor 52. The pad 70 includes a lining material 72 and a metal back plate 74, the lining material 72 being integrally provided on the surface of the back plate 74 on the side of the disc rotor 52. When applying hydraulic pressure to the hydraulic chamber 64 of the disc brake 50 from the outside, the piston 62 moves in the direction indicated by an arrow B in FIG. 6 to press the pad 70 on the side of the piston 62 (inner side) against a pressure-contact surface 52a of the disc rotor 52. At the same time, the caliper body 60 slides in the direction indicated by an arrow C in FIG 6 through a slide pin (not shown) so that the reaction section 60b presses the outer-side pad 70 against the other pressure-contact surface 52b of the disc rotor 52. A sliding loss occurs due to the friction between the pad 70 and the disc rotor 52 to obtain a braking force due to the sliding loss. In this case, small vibrations always occur during braking due to the friction between the pad 70 and the disc rotor 52. These vibrations resonate with the disc rotor 52, the caliper body 60, and the like to produce unusual sound (noise) from the disc brake 50.

In order to prevent such noise, the disc brake 50 is configured so that the shim plate 76 is provided between the pad 70 and the piston 62 on the side of the action section 60a and another shim plate 76 is provided between the pad 70 and the reaction section 60b on the side of the reaction section 60b (see JP-A-6-94057, for example). The shim plate 76 is attached to the back plate 74 using locking pieces 76c. As shown in FIG 7, the shim plate 76 includes a thin metal plate 76a made of stainless steel, and a sheet-shaped rubber section 76x which is vulcanization-bonded to each side of the metal plate 76a and is produced by mixing a filler such as reinforcing fibers and magnesium oxide into a synthetic rubber such as a nitrile rubber (NBR: acrylonitrile-butadiene rubber). As examples of the rubber material used for the rubber section 76x, a styrene-butadiene rubber (SBR), an ethylene-propylene rubber (EPDM), and the like are mentioned in addition to a nitrile rubber (NBR). A generally used rubber material is a nitrile rubber (NBR) which has a high glass transition temperature (Tg) and exhibits excellent attenuation characteristics (loss tangent (tandelta)).

However, a shim plate having a rubber section using a nitrile rubber (NBR) exhibits low attenuation characteristics (loss tangent (tandelta)) at a high temperature (e.g., 120°C) and has a low deterioration start temperature, for example. Therefore, noise tends to be produced when the temperature of the disc brake increases. Moreover, attenuation characteristics decrease due to deterioration of the rubber section caused by a high temperature, whereby the life of the shim plate decreases as compared with other parts of the disc brake.

It is generally difficult to disperse carbon nanofibers in a matrix as a filler. The inventors of the invention have proposed a method of producing a carbon fiber composite material which improves the dispersibility of carbon nanofibers to enable the carbon nanofibers to be uniformly dispersed in an elastomer (see JP-A-2005-97525, for example). According to this method of producing a carbon fiber composite material, an elastomer and carbon nanofibers are mixed so that the dispersibility of the carbon nanofibers with strong aggregating properties is improved due to a shear force. Specifically, when mixing the elastomer and the carbon nanofibers, the viscous elastomer enters the space between the carbon nanofibers, and a specific portion of the elastomer is bonded to a highly active site of the carbon nanofiber through chemical interaction. When a high shear force is applied to the mixture of the carbon nanofibers and the elastomer having an appropriately long molecular length and a high molecular mobility (exhibiting elasticity), the carbon nanofibers move along with the deformation of the elastomer. The aggregated carbon nanofibers are separated by the restoring force of the elastomer due to elasticity, and become dispersed in the elastomer. As described above, expensive carbon nanofibers can be efficiently used as a filler for a composite material by improving the dispersibility of the carbon nanofibers in the matrix.

### SUMMARY

According to a first aspect of the invention, there is provided a disc brake shim plate as defined in claim 1

According to a second aspect of the invention, there is provided a disc brake shim plate as defined in claim 2.

### BRIEF DESCRIPTION OF THE SEVERAL VIEWS OF THE DRAWING

FIG 1 is a front view showing a state in which a shim plate according to one embodiment of the invention and a pad are assembled.
FIG. 2 is a vertical cross-sectional view of the shim plate shown in FIG. 1 along the line III-III'.
FIG. 3 is a partially enlarged vertical cross-sectional view of a portion of the shim plate shown in FIG 2.
FIG. 4 is a diagram schematically showing a method of producing a rubber composition using an open-roll method.
FIG. 5 is a graph giving temperature (°C) versus differential coefficient of linear expansion (ppm/K) for Example 5 and Comparative Examples 1 and 2.
FIG 6 is a vertical cross-sectional view showing an example of a disc brake used as a vehicular brake.
FIG. 7 is a vertical cross-sectional view of a shim plate.
FIG. 8 is a diagram schematically showing a method of producing a rubber composition using an internal mixer.
FIG. 9 is a diagram schematically showing a third mixing step (tight milling) of a rubber composition using an open-roll machine.
FIG 10 is a graph giving temperature (°C) versus differential coefficient of linear expansion (ppm/K) for Example 4a and Comparative Examples 1 a and 2a.
FIG 11 is a graph giving temperature (°C) versus differential coefficient of linear expansion (ppm/K) for Example 4b and Comparative Examples 3b and 4b.

### DETAILED DESCRIPTION OF THE EMBODIMENT

The invention may provide a disc brake shim plate provided with excellent attenuation characteristics at a high temperature by uniformly dispersing carbon nanofibers.

According to one embodiment of the invention, there is provided a disc brake shim plate which produces a braking force by pressing a pad including a lining material against a disc rotor, the shim plate comprising:
a metal plate; and
a rubber section formed on at least one side of the metal plate;
the rubber section including a nitrile rubber and carbon nanofibers having an average diameter of 0.5 to 500 nm and dispersed in the nitrile rubber, the rubber section in uncrosslinked form having a first spin-spin relaxation time (T2n), measured at 150°C by a Halm-echo method using a pulsed NMR technique with ¹H as an observing nucleus, of 100 to 3000 microseconds, and a fraction (fnn) of components having a second spin-spin relaxation time (T2nn) of less than 0.2; and wherein the rubber section has a loss tangent (tandelta) at 200°C of 0.05 to 1.00.

Since the disc brake shim plate according to this embodiment has a first spin-spin relaxation time (T2n) and a fraction (fnn) of components having a second spin-spin relaxation time (T2nn) within the above ranges, the carbon nanofibers are uniformly dispersed in the elastomer of the rubber section. Therefore, the shim plate has a high deterioration start temperature and exhibits excellent attenuation characteristics at a high temperature.

Effects obtained when using natural rubber as the elastomer are as follows. Specifically, since natural rubber has a glass transition temperature lower than that of a nitrile rubber, the disc brake shim plate according to this embodiment can maintain rigidity and attenuation characteristics at a low temperature and a high temperature by using natural rubber for the rubber section. Therefore, noise can be effectively reduced during use at a low temperature and a high temperature as compared with the case of using a nitrile rubber. Since the shim plate according to this embodiment exhibits excellent heat resistance due to the high deterioration start temperature, the rubber section of the shim plate rarely deteriorates even if the temperature of the disc brake is increased, whereby the life of the shim plate can be increased. Even if the natural rubber used for the shim plate according to this embodiment is not crosslinked, the shim plate exhibits attenuation characteristics similar to those when using a crosslinked natural rubber. Therefore, the shim plate according to this embodiment can be used as an uncrosslinked shim plate. In this case, the shim plate can be recycled by mixing the material after use by applying a shearing force. In particular, since natural rubber is a naturally-occurring material, a shim plate using natural rubber is an environment-friendly automotive component.

Effects obtained when using an ethylene-propylene rubber as the elastomer are as follows. Specifically, the disc brake shim plate according to this embodiment can maintain rigidity and attenuation characteristics at a high temperature even when using an ethylene-propylene rubber for the rubber section. Therefore, noise can be effectively reduced during use at a high temperature. Since the shim plate according to this embodiment exhibits excellent heat resistance due to the high deterioration start temperature, the rubber section of the shim plate rarely deteriorates even if the temperature of the disc brake is increased, whereby the life of the shim plate can be increased. Even if the ethylene-propylene rubber used for the shim plate according to this embodiment is not crosslinked, the shim plate exhibits attenuation characteristics similar to those when using a crosslinked ethylene-propylene rubber. Therefore, the shim plate according to this embodiment can be used as an uncrosslinked shim plate. In this case, the shim plate can be recycled by mixing the material after use by applying a shearing force. Moreover, the minimum use temperature is decreased as compared with a related-art shim plate by using an ethylene-propylene rubber for the rubber section of the shim plate, whereby attenuation characteristics can be obtained over a wide temperature range from a high temperature to a low temperature.

Effects obtained when using a nitrile rubber as the elastomer are as follows. Specifically, the disc brake shim plate according to this embodiment can maintain rigidity and attenuation characteristics at a high temperature even when using a nitrile rubber for the rubber section. Therefore, noise can be effectively reduced during use at a high temperature. Since the shim plate according to this embodiment exhibits excellent heat resistance due to the high deterioration start temperature, the rubber section of the shim plate rarely deteriorates even if the temperature of the disc brake is increased, whereby the life of the shim plate can be increased. Even if the nitrile rubber used for the shim plate according to this embodiment is not crosslinked, the shim plate exhibits attenuation characteristics similar to those when using a crosslinked nitrile rubber. Therefore, the shim plate according to this embodiment can be used as an uncrosslinked shim plate. In this case, the shim plate can be recycled by mixing the material after use by applying a shearing force.

According to one embodiment of the invention, there is provided a disc brake shim plate which produces a braking force by pressing a pad including a lining material against a disc rotor, the shim plate comprising:
a metal plate; and
a rubber section formed on at least one surface of the metal plate;
the rubber section including a nitrile rubber and carbon nanofibers having an average diameter of 0.5 to 500 nm and dispersed in the nitrile rubber, the rubber section in crosslinked form having a first spin-spin relaxation time (T2n), measured at 150°C by a Hahn-echo method using a pulsed NMR technique with ¹H as an observing nucleus, of 100 to 2000 microseconds, and a fraction (fnn) of components having a second spin-spin relaxation time (T2nn) of less than 0.2; and
wherein the rubber section has a loss tangent (tandelta) at 200°C of 0.05 to 1.00.

Since the disc brake shim plate according to this embodiment has a first spin-spin relaxation time (T2n) and a fraction (fnn) of components having a second spin-spin relaxation time (T2nn) within the above ranges, the carbon nanofibers are uniformly dispersed in the elastomer of the rubber section. Therefore, the shim plate has a high deterioration start temperature and exhibits excellent attenuation characteristics at a high temperature.

Effects obtained when using natural rubber as the elastomer are as follows. Specifically, since natural rubber has a glass transition temperature lower than that of a nitrile rubber, the disc brake shim plate according to this embodiment can maintain rigidity and attenuation characteristics at a low temperature and a high temperature by using natural rubber for the rubber section. Therefore, noise can be effectively reduced during use at a low temperature and a high temperature as compared with the case of using a nitrile rubber. Since the shim plate according to this embodiment exhibits excellent heat resistance due to the high deterioration start temperature, the rubber section of the shim plate rarely deteriorates even if the temperature of the disc brake is increased, whereby the life of the shim plate can be increased. In particular, since natural rubber is a naturally-occurring material, a shim plate using natural rubber is an environment-friendly automotive component.

Effects obtained when using an ethylene-propylene rubber as the elastomer are as follows. Specifically, the disc brake shim plate according to this embodiment can maintain rigidity and attenuation characteristics at a high temperature even when using an ethylene-propylene rubber for the rubber section. Therefore, noise can be effectively reduced during use at a high temperature. Since the shim plate according to this embodiment exhibits excellent heat resistance due to the high deterioration start temperature, the rubber section of the shim plate rarely deteriorates even if the temperature of the disc brake is increased, whereby the life of the shim plate can be increased. Moreover, the minimum use temperature is decreased as compared with a related-art shim plate by using an ethylene-propylene rubber for the rubber section of the shim plate, whereby attenuation characteristics can be obtained over a wide temperature range from a high temperature to a low temperature.

Effects obtained when using a nitrile rubber as the elastomer are as follows. Specifically, the disc brake shim plate according to this embodiment can maintain rigidity and attenuation characteristics at a high temperature even when using a nitrile rubber for the rubber section. Therefore, noise can be effectively reduced during use at a high temperature. Since the shim plate according to this embodiment exhibits excellent heat resistance due to the high deterioration start temperature, the rubber section of the shim plate rarely deteriorates even if the temperature of the disc brake is increased, whereby the life of the shim plate can be increased.

In the disc brake shim plate of this embodiment, the elastomer may be a nitrile rubber and the rubber section may have a deterioration start temperature determined by thermomechanical analysis of 160 to 300°C.

In the disc brake shim plate of this embodiment, the rubber section may be formed on each side of the metal plate.

The embodiments of the invention will be described in detail below, with reference to the drawings.

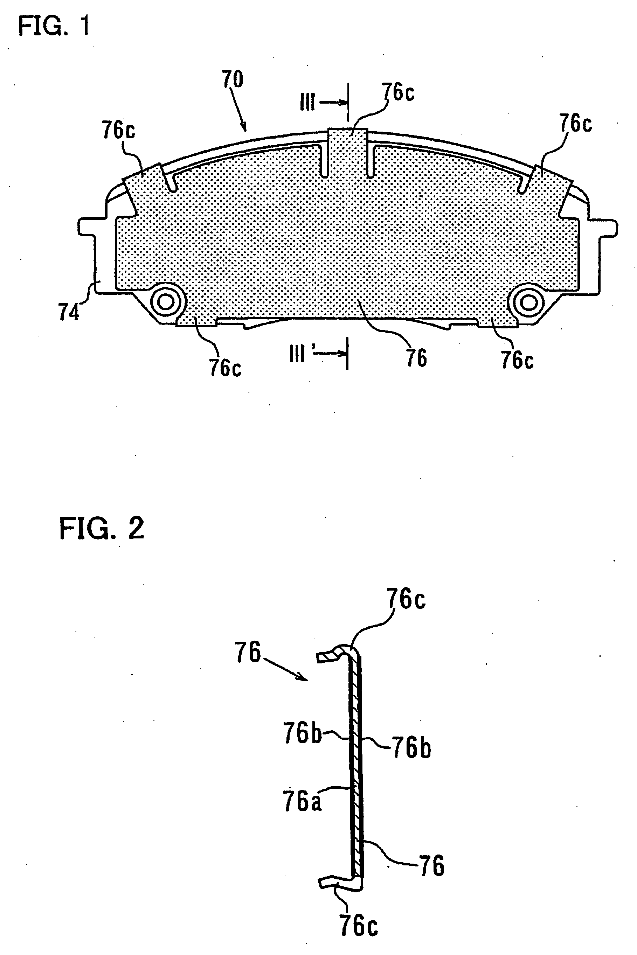

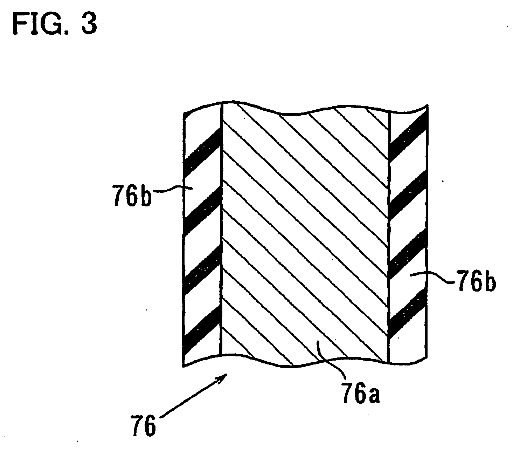

FIG 1 is a front view showing a state in which a shim plate according to one embodiment of the invention and a pad are assembled. FIG. 2 is a vertical cross-sectional view of the shim plate shown in FIG. 1 along the line III-III'. FIG 3 is a partially enlarged vertical cross-sectional view of a portion of the shim plate shown in FIG 2.

A shim plate 76 according to this embodiment may be used for a vehicular disc brake 50 shown in FIG. 6 which produces a braking force by pressing a pad 70 including a lining material 72 against a disc rotor 52, for example. Noise produced from the disc brake 50 is prevented by providing the shim plate 76 between the pad 70 and a piston 62 on the side of an action section 60a of the disc brake 50 and providing another shim plate 76 between the pad 70 and a reaction section 60b on the side of the reaction section 60b. As shown in FIG 1, the shim plate 76 is provided in the disc brake 50 shown in FIG 6 in a state in which the shim plate 76 is attached to a back plate 74 of the pad 70 using locking pieces 76c. As shown in FIGS. 2 and 3, the shim plate 76 includes a thin metal plate 76a made of stainless steel and a sheet-shaped rubber section 76b which is vulcanization-bonded to each side of the metal plate 76a and formed of an elastomer reinforced with carbon nanofibers. In this embodiment, the rubber section 76b is formed on each side of the metal plate 76a. Note that it suffices that the rubber section 76b be formed on at least one side of the metal plate 76a. A plurality of (e.g., two) shim plates 76 may be attached to the back plate 74 in layers. The type of the disc brake 50 is not limited to the pin-slide disc brake employed in this embodiment. The disc brake 50 may be an opposed disc brake in which pistons are disposed on both sides of a disc rotor. The number of pistons and the shape of the shim plate are not limited to those employed in this embodiment.

The rubber section 76b in uncrosslinked form has a first spin-spin relaxation time (T2n), measured for ¹H at 150°C by the Hahn-echo method using the pulsed NMR technique, of 100 to 3000 microseconds, and a fraction (fnn) of components having a second spin-spin relaxation time (T2nn) of less than 0.2. The rubber section 76b in crosslinked form has a first spin-spin relaxation time (T2n), measured at 150°C by the Hahn-echo method using the pulsed NMR technique, of 100 to 2000 microseconds, and a fraction (fnn) of components having a second spin-spin relaxation time (T2nn) of less than 0.2.

The first spin-spin relaxation time (T2n) and the fraction (fnn) of the rubber section 76b indicate whether or not the carbon nanofibers are uniformly dispersed in the elastomer as the matrix. Specifically, when the carbon nanofibers are uniformly dispersed in the elastomer, the elastomer is restrained by the carbon nanofibers. In this state, the mobility of the elastomer molecules restrained by the carbon nanofibers is lower than that of the elastomer molecules which are not restrained by the carbon nanofibers. Therefore, the first spin-spin relaxation time (T2n), the second spin-spin relaxation time (T2nn), and the spin-lattice relaxation time (T1) of the rubber section 76b according to this embodiment are shorter than those of the elastomer which does not include the carbon nanofibers. In particular, the first spin-spin relaxation time (T2n), the second spin-spin relaxation time (T2nn), and the spin-lattice relaxation time (T1) are further reduced when the carbon nanofibers are uniformly dispersed. The spin-lattice relaxation time (T1) of the rubber section 76b in crosslinked form changes in proportion to the amount of carbon nanofibers mixed.

When the elastomer molecules are restrained by the carbon nanofibers, the number of non-network components (non-reticulate chain components) is considered to be reduced for the following reasons. Specifically, when the molecular mobility of the entire elastomer decreases due to the carbon nanofibers, the amount of non-network components which cannot easily move increases, whereby the non-network components tend to behave in the same manner as the network components. Moreover, since the non-network components (terminal chains) easily move, the non-network components tend to be adsorbed on the active sites of the carbon nanofibers. It is considered that these phenomena decrease the amount of non-network components. Therefore, the fraction (fnn) of components having the second spin-spin relaxation time (T2nn) becomes smaller than that of the elastomer which does not include the carbon nanofibers. Note that the fraction (fn) of components having the first spin-spin relaxation time (T2n) becomes greater than that of the elastomer which does not include the carbon nanofibers, since fn+fnn=1.

Therefore, when the rubber section 76b according to this embodiment has values measured by the Hahn-echo method using the pulsed NMR technique within the above ranges, the carbon nanofibers are uniformly dispersed in the rubber section 76b.

The spin-lattice relaxation time (T1) measured by an inversion recovery method using the pulsed NMR technique is a measure indicating the molecular mobility of a substance together with the spin-spin relaxation time (T2). Specifically, the shorter the spin-lattice relaxation time of the elastomer, the lower the molecular mobility and the harder the elastomer. The longer the spin-lattice relaxation time of the elastomer, the higher the molecular mobility and the softer the elastomer.

The elastomer may be one material selected from a natural rubber, an ethylene-propylene rubber, and a nitrile rubber.

### 1. When using natural rubber as elastomer

The rubber section 76b preferably has a loss tangent (tandelta) at 150°C of 0.05 to 1.00, and more preferably 0.05 to 0.5. The loss tangent (tandelta) may be obtained by determining the dynamic shear modulus (E', dyn/cm²) and the dynamic loss modulus (E", dyn/cm²) by carrying out a dynamic viscoelasticity test, and calculating the loss tangent (tandelta=E"/E'). If the loss tangent (tandelta) at 150°C is 0.05 or more, a rubber section 76b having high attenuation characteristics in a high temperature region (150°C) may be obtained.

The rubber section 76b preferably has a dynamic modulus of elasticity (E') at 150°C of 5 to 1000 MPa, and more preferably 5 to 100 MPa.

The rubber section 76b preferably has a deterioration start temperature determined by thermomechanical analysis of 150 to 300°C, and more preferably 170 to 300°C. The deterioration start temperature determined by thermomechanical analysis refers to a temperature at which a deterioration phenomenon including softening deterioration (expansion) and curing deterioration (shrinkage) starts to occur, and is determined by measuring the deterioration phenomenon start temperature from a characteristic graph giving temperature versus differential coefficient of linear expansion obtained by thermomechanical analysis. When the rubber section 76b has a high deterioration start temperature, the rubber section 76b does not deteriorate at a high temperature. Therefore, the maximum temperature at which the shim plate 76 can be used increases. In the rubber section 76b, since the carbon nanofibers are uniformly dispersed in the natural rubber, the natural rubber is restrained by the carbon nanofibers. Therefore, the natural rubber exhibits molecular motion smaller than that of the natural rubber which does not include the carbon nanofibers, whereby the deterioration start temperature increases.

A method of producing a rubber composition forming the rubber section 76b is described below.

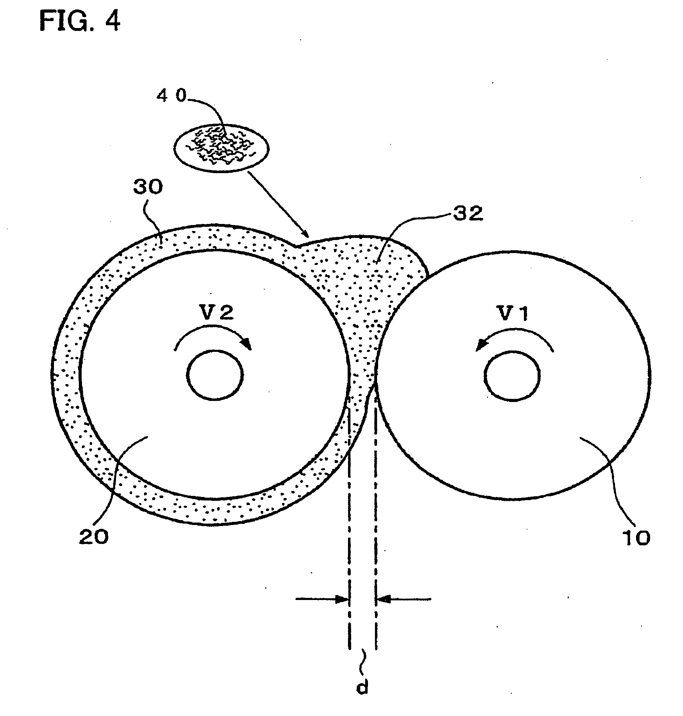

FIG 4 is a diagram schematically showing a method of producing a rubber composition using an open-roll method.

The network component of the raw material natural rubber in uncrosslinked form has a first spin-spin relaxation time (T2n), measured for ¹H at 30°C by the Hahn-echo method using the pulsed NMR technique, of 100 to 3000 microseconds. As shown in FIG 4, a first roll 10 and a second roll 20 are disposed at a predetermined distance d (e.g., 0.5 nun to 1.0 mm). The first roll 10 and the second roll 20 are respectively rotated at rotational speeds V 1 and V2 in the directions indicated by arrows in FIG 4 or in the reverse directions. A natural rubber 30 wound around the second roll 20 is masticated. This causes the molecular chain of the natural rubber to be moderately cut to produce free radicals. A carbon nanofiber generally has a structure in which the side surface is formed of a six-membered ring of carbon atoms and the end is closed by a five-membered ring. Since the carbon nanofiber has a forced structure, defects tend to occur, whereby radicals or functional groups tend to be formed at such defects. Therefore, free radicals of the natural rubber are easily bonded to the carbon nanofibers due to mastication.

Carbon nanofibers 40 with an average diameter of 0.5 to 500 nm are then supplied to a bank 32 of the natural rubber 30 wound around the second roll 20, and the mixture is further mixed. The step of mixing the natural rubber 30 and the carbon nanofibers 40 is not limited to the open-roll method. An internal mixing method or a multi-screw extrusion kneading method may also be used.

After setting the distance d between the first roll 10 and the second roll 20 at preferably 0.5 mm or less, and more preferably 0 to 0.5 mm, the mixture is supplied to the open rolls and tight-milled two or more times. Tight milling is preferably performed about five to ten times, for example. When the surface velocity of the first roll 10 is referred to as V1 and the surface velocity of the second roll 20 is referred to as V2, the surface velocity ratio (V1/V2) of the first roll 10 to the second roll 20 during tight milling is preferably set at 1.05 to 3.00, and more preferably 1.05 to 1.2. A desired shear force can be obtained using such a surface velocity ratio. The tight-milled rubber composition is rolled using the rolls and sheeted. In the tight milling step, the natural rubber 30 is preferably tight-milled while setting the roll temperature at a relatively low temperature (i.e., preferably 0 to 50°C, and more preferably 5 to 30°C) in order to obtain a shear force as high as possible. The measured temperature of the natural rubber 30 is preferably adjusted to 0 to 50°C. This causes a high shear force to be applied to the natural rubber 30, whereby the aggregated carbon nanofibers 40 are separated so that the carbon nanofibers 40 are removed by the elastomer molecules one by one and become dispersed in the natural rubber 30. In particular, since the natural rubber 30 has elasticity, viscosity, and chemical interaction with the carbon nanofibers 40, the carbon nanofibers 40 are easily dispersed in the natural rubber 30. As a result, a rubber composition in which the carbon nanofibers 40 exhibit excellent dispersibility and dispersion stability (i.e., the carbon nanofibers rarely reaggregate) can be obtained.

Specifically, when mixing the natural rubber and the carbon nanofibers using the open rolls, the natural rubber exhibiting viscosity enters the space between the carbon nanofibers, and a specific portion of the natural rubber is bonded to a highly active site of the carbon nanofiber through chemical interaction. When a high shear force is then applied to the natural rubber, the carbon nanofibers move along with the movement of the natural rubber molecules, whereby the aggregated carbon nanofibers are separated by the restoring force of the natural rubber due to elasticity which occurs after shearing, and become dispersed in the natural rubber. According to this embodiment, when the rubber composition is extruded through the narrow space between the rolls, the rubber composition is deformed to have a thickness greater than the roll distance as a result of the restoring force of the natural rubber due to elasticity. It is estimated that the above deformation causes the rubber composition to which a high shear force is applied to flow in a more complicated manner to disperse the carbon nanofibers in the natural rubber. The carbon nanofibers which have been dispersed are prevented from reaggregating due to the chemical interaction with the natural rubber, whereby excellent dispersion stability can be achieved.

In the step of dispersing the carbon nanofibers in the natural rubber by applying a shear force, an internal mixing method or a multi-screw extrusion kneading method may be used instead of the open-roll method. Specifically, it suffices that a shear force sufficient to separate the aggregated carbon nanofibers be applied to the natural rubber. It is particularly preferable to use the open-roll method, since the actual temperature of the mixture can be measured and controlled while controlling the roll temperature.

In the method of producing a rubber composition, a crosslinking agent may be mixed into the rubber composition sheeted after tight milling, and the rubber composition may be crosslinked to obtain a crosslinked rubber composition. The rubber composition may be molded without crosslinking. The rubber composition may be used in the form of a sheet obtained using the open roll method. Or, the rubber composition may be formed into a desired shape (e.g., sheet) using a generally-used rubber molding method such as injection molding, transfer molding, press molding, extrusion molding, or calendering.

In the method of producing a rubber composition according to this embodiment, a compounding ingredient usually used when processing a natural rubber may be used. As the compounding ingredient, a known compounding ingredient may be used. As examples of the compounding ingredient, a crosslinking agent, a vulcanizing agent, a vulcanization accelerator, a vulcanization retarder, a softener, a plasticizer, a curing agent, a reinforcing agent, a filler, an aging preventive, a colorant, and the like can be given. These compounding ingredients may be added to the natural rubber before supplying the carbon nanofibers to the open rolls, for example.

The resulting rubber composition may be stacked on and bonded to the metal plate 76a via crosslinking bonding or the like to form the rubber section 76b. Or, the rubber composition may be dissolved in a solvent, and the resulting mixture may be applied by spray coating, roll coating, dipping, or the like and then heated to form the rubber section 76b.

As the natural rubber (abbreviated as "NR"), a relatively wide range of natural rubber may be used insofar as the natural rubber is a naturally produced ecological material and exhibits rubber elasticity at room temperature. A natural rubber has a low glass transition temperature of -79 to -69°C as compared a nitrile rubber (glass transition temperature: about -50°C) which has been generally used for a shim plate. Therefore, a natural rubber can be used in a low temperature region as compared with a nitrile rubber. The maximum usable temperature of the natural rubber is lower than that of a nitrile rubber in a high temperature region. However, a natural rubber can maintain rigidity and attenuation characteristics at a high temperature as compared with a nitrile rubber by preparing a rubber composition including the natural rubber and the carbon nanofibers. The average molecular weight of the natural rubber is preferably 50,000 or more, more preferably 70,000 or more, and particularly preferably about 100,000 to 500,000.

In the method of producing a rubber composition according to this embodiment, the carbon nanofibers are directly mixed into the natural rubber having rubber elasticity. Note that the method is not limited thereto. The following method may also be employed. Specifically, before mixing the carbon nanofibers into the natural rubber, the natural rubber is masticated to reduce the molecular weight of the natural rubber. Since the viscosity of the natural rubber decreases due to a decrease in molecular weight as a result of mastication, the natural rubber easily enters the space between the aggregated carbon nanofibers. The raw material natural rubber is a rubber elastic body of which the network component in uncrosslinked form has a first spin-spin relaxation time (T2n), measured for ¹H at 30°C by the Hahn-echo method using the pulsed NMR technique, of 100 to 3000 microseconds. The raw material natural rubber is masticated to reduce the molecular weight of the natural rubber to obtain a liquid natural rubber having a first spin-spin relaxation time (T2n) of more than 3000 microseconds. The first spin-spin relaxation time (T2n) of the liquid natural rubber after mastication is preferably 5 to 30 times the first spin-spin relaxation time (T2n) of the raw material natural rubber before mastication. The above mastication is performed until the natural rubber is liquefied (i.e., until the natural rubber exhibits fluidity which is not suitable for mixing) by cutting the molecules of the natural rubber by applying a high shear force using the open-roll method or the like to reduce the molecular weight of the natural rubber to a large extent, differing from normal mastication performed in a state in which the natural rubber is solid. For example, when using the open-roll method, mastication is performed at a roll temperature of 20°C (minimum mastication time: 60 minutes) to 150°C (minimum mastication time: 10 minutes). The roll distance d is set at 0.1 to 1.0 mm, for example. The carbon nanofibers are then supplied to the liquid natural rubber obtained by mastication. However, since the elasticity of the liquid natural rubber has been significantly reduced, the aggregated carbon nanofibers are dispersed to only a small extent, even if the natural rubber and the carbon nanofibers are mixed in a state in which free radicals of the natural rubber are bonded to the carbon nanofibers.

Therefore, the molecular weight of the natural rubber in the mixture obtained by mixing the liquid natural rubber and the carbon nanofibers is increased to cause the natural rubber to recover its elasticity to obtain a rubber elastic body mixture, and the carbon nanofibers are uniformly dispersed in the natural rubber by tight milling using the open-roll method or the like. The mixture in which the molecular weight of the natural rubber has been increased is a rubber elastic body of which the network component has a first spin-spin relaxation time (T2n), measured for ¹H at 30°C by the Halm-echo method using the pulsed NMR technique, of 3000 microseconds or less. The first spin-spin relaxation time (T2n) of the rubber elastic body mixture in which the molecular weight of the natural rubber has been increased is preferably 0.5 to 10 times the first spin-spin relaxation time (T2n) of the raw material natural rubber before mastication. The elasticity of the rubber elastic body mixture may be expressed by the molecular form (which may be observed from the molecular weight) and the molecular mobility (which may be observed from the first spin-spin relaxation time (T2n)) of the natural rubber. The step of increasing the molecular weight of the natural rubber is preferably performed by placing the mixture in a heating furnace set at 40 to 100°C and heating the mixture for 10 to 100 hours, for example. This causes the molecular chain of the natural rubber to extend due to bonding between free radicals of the natural rubber in the mixture, whereby the molecular weight of the natural rubber increases. The molecular weight of the natural rubber may be increased in a short time by mixing a small amount (e.g., 1/2 or less of a normal amount) of a crosslinking agent into the mixture and heating (e.g., annealing) the mixture to effect a crosslinking reaction. When increasing the molecular weight of the natural rubber by a crosslinking reaction, it is preferable to set the amount of crosslinking agent, the heating time, and the heating temperature so that mixing in the subsequent step is not hindered.

According to the above-described method of producing the rubber section of the shim plate, the carbon nanofibers can be more uniformly dispersed in the natural rubber by reducing the viscosity of the natural rubber before supplying the carbon nanofibers. Specifically, the liquid natural rubber of which the molecular weight has been reduced easily enters the space between the aggregated carbon nanofibers as compared with the above-described method in which the carbon nanofibers are mixed into the natural rubber having a high molecular weight, whereby the carbon nanofibers can be more uniformly dispersed in the tight milling step. Since a large number of free radicals of the natural rubber produced by cutting the molecules of the natural rubber can be strongly bonded to the surface of the carbon nanofibers, the carbon nanofibers can be further uniformly dispersed. Therefore, the above-described production method enables an equivalent performance to be obtained with a reduced amount of carbon nanofibers, whereby economic efficiency can be improved by saving expensive carbon nanofibers.

### 2. When using ethylene-propylene rubber as elastomer

The rubber section 76b preferably has a loss tangent (tandelta) at 200°C of 0.05 to 1.00, and more preferably 0.05 to 0.5. The loss tangent (tandelta) may be obtained by determining the dynamic shear modulus (E', dyn/cm²) and the dynamic loss modulus (E", dyn/cm²) by carrying out a dynamic viscoelasticity test, and calculating the loss tangent (tandelta=E"/E'). If the loss tangent (tandelta) at 200°C is 0.05 or more, a rubber section 76b having high attenuation characteristics in a high temperature region (200°C) may be obtained.

The rubber section 76b preferably has a dynamic modulus of elasticity (E') at 200°C of 10 to 1000 MPa, and more preferably 10 to 100 MPa.

The rubber section 76b preferably has a deterioration start temperature determined by thermomechanical analysis of 160 to 300°C, and more preferably 200 to 300°C. The deterioration start temperature determined by thermomechanical analysis refers to a temperature at which a deterioration phenomenon including softening deterioration (expansion) and curing deterioration (shrinkage) starts to occur, and is determined by measuring the deterioration phenomenon start temperature from a characteristic graph giving temperature versus differential coefficient of linear expansion obtained by thermomechanical analysis. When the rubber section 76b has a high deterioration start temperature, the rubber section 76b does not deteriorate at a high temperature. Therefore, the maximum temperature at which the shim plate 76 can be used increases. In the rubber section 76b, since the carbon nanofibers are uniformly dispersed in the ethylene-propylene rubber, the ethylene-propylene rubber is restrained by the carbon nanofibers. Therefore, the ethylene-propylene rubber exhibits molecular motion smaller than that of the ethylene-propylene rubber which does not include the carbon nanofibers, whereby the deterioration start temperature increases.

A method of producing a rubber composition forming the rubber section 76b is described below.

The method of producing a rubber composition forming the rubber section 76b includes dispersing carbon nanofibers in an ethylene-propylene rubber as the raw material. The network component of the raw material ethylene-propylene rubber in uncrosslinked form has a first spin-spin relaxation time (T2n), measured for ¹H at 30°C by the Hahn-echo method using the pulsed NMR technique, of 100 to 3000 microseconds.

The step of dispersing the carbon nanofibers in the ethylene-propylene rubber includes a first mixing step of mixing the ethylene-propylene rubber and the carbon nanofibers at a first temperature, a second mixing step of mixing the mixture obtained by the first mixing step at a second temperature, and a third mixing step of tight-milling the mixture obtained by the second mixing step. This embodiment illustrates an example in which the internal mixing method is used in the first mixing step and the second mixing step and the open-roll method is used in the third mixing step.

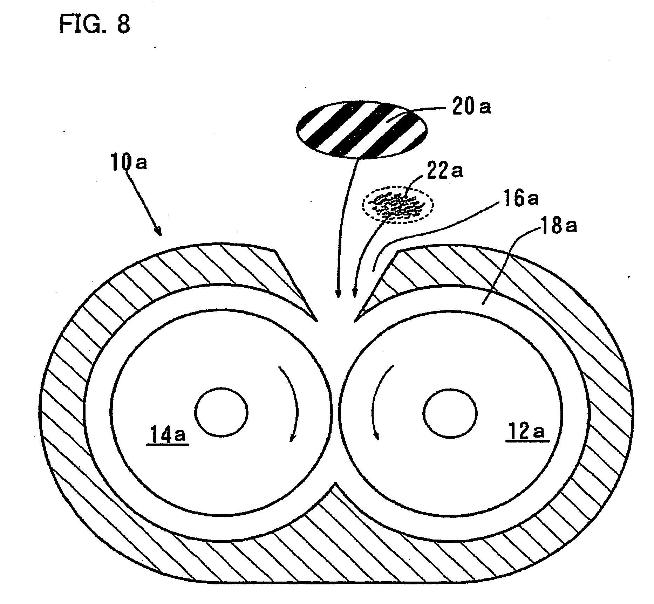

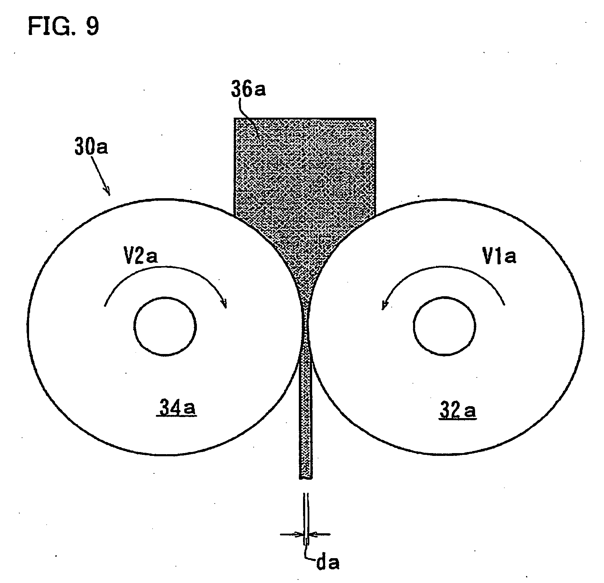

FIG 8 is a diagram schematically showing an internal mixer using two rotors. FIG 9 is a diagram schematically showing the third mixing step of the rubber composition using an open-roll machine. In FIG 8, an internal mixer 10a includes a first rotor 12a and a second rotor 14a. The first rotor 12a and the second rotor 14a are disposed at a predetermined interval. The ethylene-propylene rubber can be mixed by rotating the first rotor 12a and the second rotor 14a. In the example shown in FIG 8, the first rotor 12a and the second rotor 14a are rotated in opposite directions (e.g., directions indicated by arrows in FIG 8) at a predetermined velocity ratio. A desired shear force can be obtained by adjusting the velocities of the first rotor 12a and the second rotor 14a, the interval between the rotors 12a and 14a and the inner wall of a chamber 18a, and the like. The shear force in this step is appropriately set depending on the type of ethylene-propylene rubber, the amount of carbon nanofibers, and the like.

### Mixing step

An ethylene-propylene rubber 20 is supplied through a material supply port 16a of the internal mixer 10a, and the first and second rotors 12a and 14a are rotated. After the addition of carbon nanofibers 22a to the chamber 18a, the first and second rotors 12a and 14a are further rotated to mix the ethylene-propylene rubber 20a and the carbon nanofibers 22a. A known compounding ingredient such as carbon black may be added either simultaneously with or prior to the addition of the carbon nanofibers 22a. This step is generally called mastication, in which the temperature of the internal mixer is set at 20°C, for example.

### First mixing step

The first mixing step of further mixing the mixture obtained by mixing the carbon nanofibers 22a into the ethylene-propylene rubber 20a is then performed. Specifically, the first and second rotors 12a and 14a are rotated at a predetermined velocity ratio. In the first mixing step, the ethylene-propylene rubber and the carbon nanofibers are mixed at the first temperature lower than the temperature employed in the second mixing step by 50 to 100°C in order to obtain a shear force as high as possible. The first temperature is preferably 0 to 50°C, and more preferably 5 to 30°C. If the first temperature is lower than 0°C, mixing may be difficult. If the first temperature is higher than 50°C, a high shear force may not be obtained, whereby the carbon nanofibers may not be dispersed over the entire ethylene-propylene rubber. The first temperature may be set by adjusting the temperature of the chamber 18a or the temperatures of the first and second rotors 12a and 14a. The velocity ratio and various temperatures may be controlled while measuring the temperature of the mixture. When performing the first mixing step after the above-described mixing step using the same internal mixer, the internal mixer may be set at the first temperature in advance.

When using nonpolar EPDM (ethylene-propylene-diene copolymer rubber) as the ethylene-propylene rubber 20a, the carbon nanofibers 22a are dispersed over the entire ethylene-propylene rubber 20a by the first mixing step while forming aggregates.

### Second mixing step

The mixture obtained by the first mixing step is supplied to another internal mixer 10a to perform the second mixing step. In the second mixing step, the mixture is mixed at the second temperature higher than the first temperature by 50 to 100°C in order to produce radicals by cutting the molecules of the ethylene-propylene rubber 20a. The temperature of the internal mixer 10a used in the second mixing step has been increased to the second temperature using a heater provided in a rotor or a heater provided in a chamber so that the second mixing step can be performed at the second temperature higher than the first temperature. The second temperature may be appropriately selected depending on the type of ethylene-propylene rubber used. The second temperature is preferably 50 to 150°C. If the second temperature is lower than 50°C, radicals may be produced in the molecules of the ethylene-propylene rubber to only a small extent, whereby the carbon nanofiber aggregates may not be disentangled. If the second temperature is higher than 150°C, the molecular weight of the ethylene-propylene rubber may be considerably decreased, whereby the modulus of elasticity may be decreased.

The mixing time of the second mixing step may be appropriately set depending on the second temperature, the rotor interval, the rotational velocity, and the like. In this embodiment, effects can be obtained by a mixing time of about 10 minutes or more. The molecules of the ethylene-propylene rubber 20a are cut to produce radicals by performing the second mixing step, and the carbon nanofibers 22a are easily bonded to the radicals of the molecules of the ethylene-propylene rubber.

### Third mixing step

A mixture 36a obtained by the second mixing step is supplied to open rolls 30a set at the first temperature, and the third mixing step (tight-milling step) is performed two or more times (e.g., 10 times) to sheet the mixture 36a. The distance da (nip) between a first roll 32a and a second roll 34a is set at 0 to 0.5 mm (e.g., 0.3 mm) at which the shear force becomes higher than the shear force in the first and second mixing steps. The roll temperature is set at a third temperature of 0 to 50°C, and more preferably 5 to 30°C in the same manner as in the first mixing step. When the surface velocity of the first roll 32a is referred to as V1 and the surface velocity of the second roll 34a is referred to as V2, the surface velocity ratio (V1/V2) of the first roll 32a to the second roll 34a during tight milling is preferably set at 1.05 to 3.00, and more preferably 1.05 to 1.2. A desired shear force can be obtained using such a surface velocity ratio. The tight-milled rubber composition is rolled using the rolls and sheeted. The third mixing step is the final dispersion step of more uniformly dispersing the carbon nanofibers 22a in the ethylene-propylene rubber 20a. The third mixing step is effective when a more uniform dispersibility is required. The third mixing step (tight-milling step) causes the ethylene-propylene rubber 20a which has produced radicals to remove the carbon nanofibers 22a one by one, whereby the carbon nanofibers 22a can be further dispersed. A crosslinking agent may be added and uniformly dispersed in the third mixing step.

As described above, the carbon nanofibers can be dispersed over the entire ethylene-propylene rubber due to a high shear force by performing the first mixing step at the first temperature, and the carbon nanofiber aggregates can be disentangled by the radicals of the molecules of the ethylene-propylene rubber by performing the second mixing step at the second temperature and the third mixing step. Therefore, the carbon nanofibers can be dispersed over the entire nonpolar ethylene-propylene rubber such as EPDM, whereby a rubber composition without carbon nanofiber aggregates can be produced. In particular, since the ethylene-propylene rubber 20a has elasticity, viscosity, and chemical interaction with the carbon nanofibers 22a, the carbon nanofibers 22a are easily dispersed in the ethylene-propylene rubber 20a. As a result, a rubber composition in which the carbon nanofibers 22a exhibit excellent dispersibility and dispersion stability (i.e., the carbon nanofibers rarely reaggregate) can be obtained.

Specifically, when mixing the ethylene-propylene rubber and the carbon nanofibers using the open rolls, the ethylene-propylene rubber exhibiting viscosity enters the space between the carbon nanofibers, and a specific portion of the ethylene-propylene rubber is bonded to a highly active site of the carbon nanofiber through chemical interaction. When a high shear force is then applied to the ethylene-propylene rubber, the carbon nanofibers move along with the movement of the molecules of the ethylene-propylene rubber, whereby the aggregated carbon nanofibers are separated by the restoring force of the ethylene-propylene rubber due to elasticity which occurs after shearing, and become dispersed in the ethylene-propylene rubber. According to this embodiment, when the rubber composition is extruded through the narrow space between the rolls, the rubber composition is deformed to have a thickness greater than the roll distance as a result of the restoring force of the ethylene-propylene rubber due to elasticity. It is estimated that the above deformation causes the rubber composition to which a high shear force is applied to flow in a more complicated manner to disperse the carbon nanofibers in the ethylene-propylene rubber. The carbon nanofibers which have been dispersed are prevented from reaggregating due to the chemical interaction with the ethylene-propylene rubber, whereby excellent dispersion stability can be obtained.

In the first and second mixing steps of dispersing the carbon nanofibers in the ethylene-propylene rubber due to a shear force, it is preferable to use an internal mixer from the viewpoint of processability. Note that other mixers such as open rolls may also be used. As the internal mixer, a tangential or intermeshing mixer such as a Banbbury mixer, a kneader, or a Brabender may be employed. The first, second, and third mixing steps may be performed using a multi-screw extrusion kneading method (twin-screw extruder) instead of the internal mixing method and the open-roll method. The mixers may be appropriately selected in combination depending on the amount of production and the like. It is particularly preferable to use the open-roll method in the third mixing step, since the actual temperature of the mixture can be measured and controlled while controlling the roll temperature.

In the method of producing a rubber composition, a crosslinking agent may be mixed into the rubber composition sheeted after tight milling, and the rubber composition may be crosslinked to obtain a crosslinked rubber composition. The rubber composition may be molded without crosslinking. The rubber composition may be used in the form of a sheet obtained using the open roll method. Or, the rubber composition may be formed into a desired shape (e.g., sheet) using a generally-used rubber molding method such as injection molding, transfer molding, press molding, extrusion molding, or calendering.

In the method of producing a rubber composition according to this embodiment, a compounding ingredient usually used when processing an ethylene-propylene rubber may be used. As the compounding ingredient, a known compounding ingredient may be used. As examples of the compounding ingredient, a crosslinking agent, a vulcanizing agent, a vulcanization accelerator, a vulcanization retarder, a softener, a plasticizer, a curing agent, a reinforcing agent, a filler, an aging preventive, a colorant, and the like can be given. These compounding ingredients may be added to the ethylene-propylene rubber before supplying the carbon nanofibers to the mixer, , or may be added during the first to third mixing steps, for example.

The resulting rubber composition may be stacked on and bonded to the metal plate 76a via crosslinking bonding or the like to form the rubber section 76b. Or, the rubber composition may be dissolved in a solvent, and the resulting mixture may be applied by spray coating, roll coating, dipping, or the like and then heated to form the rubber section 76b.

As the ethylene-propylene rubber (EPR), an EPDM (ethylene-propylene-diene copolymer) or the like may be used. In order to obtain heat resistance, cold resistance, and attenuation characteristics required for the shim plate, the ethylene-propylene rubber according to this embodiment preferably includes a third component such as ethylidenenorbomene, and is preferably an EPDM in which the ethylene/propylene copolymerization ratio expressed by the ethylene content is 45 to 80%. The average molecular weight of the ethylene-propylene rubber is preferably 50,000 or more, more preferably 70,000 or more, and particularly preferably about 100,000 to 500,000.

In the method of producing a rubber composition according to this embodiment, the carbon nanofibers are directly mixed into the ethylene-propylene rubber having rubber elasticity. Note that the method is not limited thereto. The following method may also be employed. Specifically, before mixing the carbon nanofibers into the ethylene-propylene rubber, the ethylene-propylene rubber is masticated to reduce the molecular weight of the ethylene-propylene rubber. Since the viscosity of the ethylene-propylene rubber decreases due to a decrease in molecular weight as a result of mastication, the ethylene-propylene rubber easily enters the space between the aggregated carbon nanofibers. The network component of the raw material ethylene-propylene rubber in uncrosslinked form has a first spin-spin relaxation time (T2n), measured for ¹H at 30°C by the Hahn-echo method using the pulsed NMR technique, of 100 to 3000 microseconds. The raw material ethylene-propylene rubber is masticated to reduce the molecular weight of the ethylene-propylene rubber to obtain a liquid ethylene-propylene rubber having a first spin-spin relaxation time (T2n) of more than 3000 microseconds. The first spin-spin relaxation time (T2n) of the liquid ethylene-propylene rubber after mastication is preferably 5 to 30 times the first spin-spin relaxation time (T2n) of the raw material ethylene-propylene rubber before mastication. The above mastication is performed until the ethylene-propylene rubber is liquefied (i.e., until the ethylene-propylene rubber exhibits fluidity which is not suitable for mixing) by cutting the molecules of the ethylene-propylene rubber by applying a high shear force using the open-roll method or the like to reduce the molecular weight of the ethylene-propylene rubber to a large extent, differing from normal mastication performed in a state in which the ethylene-propylene rubber is solid. For example, when using the open-roll method, mastication is performed at a roll temperature of 20°C (minimum mastication time: 60 minutes) to 150°C (minimum mastication time: 10 minutes). The roll distance d is set at 0.1 to 1.0 mm, for example. The carbon nanofibers are then supplied to the liquid ethylene-propylene rubber obtained by mastication. However, since the elasticity of the liquid ethylene-propylene rubber has been significantly reduced, the aggregated carbon nanofibers are dispersed to only a small extent, even if the ethylene-propylene rubber and the carbon nanofibers are mixed in a state in which free radicals of the ethylene-propylene rubber are bonded to the carbon nanofibers.

Therefore, the molecular weight of the ethylene-propylene rubber in the mixture obtained by mixing the liquid ethylene-propylene rubber and the carbon nanofibers is increased to cause the ethylene-propylene rubber to recover its elasticity to obtain a rubber elastic body mixture, and the carbon nanofibers are uniformly dispersed in the ethylene-propylene rubber by tight milling using the open-roll method or the like. The network component of the rubber elastic body mixture in which the molecular weight of the ethylene-propylene rubber has been increased has a first spin-spin relaxation time (T2n), measured for ¹H at 30°C by the Hahn-echo method using the pulsed NMR technique, of 3000 microseconds or less. The first spin-spin relaxation time (T2n) of the rubber elastic body mixture in which the molecular weight of the ethylene-propylene rubber has been increased is preferably 0.5 to 10 times the first spin-spin relaxation time (T2n) of the raw material ethylene-propylene rubber before mastication. The elasticity of the rubber elastic body mixture may be expressed by the molecular form (which may be observed from the molecular weight) and the molecular mobility (which may be observed from the first spin-spin relaxation time (T2n)) of the ethylene-propylene rubber. The step of increasing the molecular weight of the ethylene-propylene rubber is preferably performed by placing the mixture in a heating furnace set at 40 to 100°C and heating the mixture for 10 to 100 hours, for example. This causes the molecular chain of the ethylene-propylene rubber to extend due to bonding between free radicals of the ethylene-propylene rubber in the mixture, whereby the molecular weight of the ethylene-propylene rubber increases. The molecular weight of the ethylene-propylene rubber may be increased in a short time by mixing a small amount (e.g., 1/2 or less of a normal amount) of a crosslinking agent into the mixture and heating (e.g., annealing) the mixture to effect a crosslinking reaction. When increasing the molecular weight of the ethylene-propylene rubber by a crosslinking reaction, it is preferable to set the amount of crosslinking agent, the heating time, and the heating temperature so that mixing in the subsequent step is not hindered.

According to the above-described method of producing the rubber section of the shim plate, the carbon nanofibers can be more uniformly dispersed in the ethylene-propylene rubber by reducing the viscosity of the ethylene-propylene rubber before supplying the carbon nanofibers. Specifically, the liquid ethylene-propylene rubber of which the molecular weight has been reduced easily enters the space between the aggregated carbon nanofibers as compared with the above-described method in which the carbon nanofibers are mixed into the ethylene-propylene rubber having a high molecular weight, whereby the carbon nanofibers can be more uniformly dispersed in the tight milling step. Since a large number of free radicals of the ethylene-propylene rubber produced by cutting the molecules of the ethylene-propylene rubber can be strongly bonded to the surface of the carbon nanofibers, the carbon nanofibers can be further uniformly dispersed. Therefore, the above-described production method enables an equivalent performance to be obtained with a reduced amount of carbon nanofibers, whereby economic efficiency can be improved by saving expensive carbon nanofibers.

### 3. When using nitrile rubber as elastomer

The rubber section 76b preferably has a loss tangent (tandelta) at 200°C of 0.05 to 1.00, and more preferably 0.05 to 0.5. The loss tangent (tandelta) may be obtained by determining the dynamic shear modulus (E', dyn/cm²) and the dynamic loss modulus (E", dyn/cm²) by carrying out a dynamic viscoelasticity test, and calculating the loss tangent (tandelta=E"/E'). If the loss tangent (tandelta) at 200°C is 0.05 or more, a rubber section 76b having high attenuation characteristics in a high temperature region (200°C) may be obtained.

The rubber section 76b preferably has a dynamic modulus of elasticity (E') at 200°C of 10 to 1000 MPa, and more preferably 10 to 100 MPa.

The rubber section 76b preferably has a deterioration start temperature determined by thermomechanical analysis of 160 to 300°C, and more preferably 200 to 300°C. The deterioration start temperature determined by thermomechanical analysis refers to a temperature at which a deterioration phenomenon including softening deterioration (expansion) and curing deterioration (shrinkage) starts to occur, and is determined by measuring the deterioration phenomenon start temperature from a characteristic graph giving temperature versus differential coefficient of linear expansion obtained by thermomechanical analysis. When the rubber section 76b has a high deterioration start temperature, the rubber section 76b does not deteriorate at a high temperature. Therefore, the maximum temperature at which the shim plate 76 can be used increases. In the rubber section 76b, since the carbon nanofibers are uniformly dispersed in the nitrile rubber, the nitrile rubber is restrained by the carbon nanofibers. Therefore, the nitrile rubber exhibits molecular motion smaller than that of the nitrile rubber which does not include the carbon nanofibers, whereby the deterioration start temperature increases.

A method of producing a rubber composition forming the rubber section 76b is described below.

FIG 4 is a diagram schematically showing a method of producing a rubber composition using the open-roll method.

The network component of the raw material nitrile rubber in uncrosslinked form has a first spin-spin relaxation time (T2n), measured for ¹H at 30°C by the Hahn-echo method using the pulsed NMR technique, of 100 to 3000 microseconds. As shown in FIG 4, a first roll 10 and a second roll 20 are disposed at a predetermined distance d (e.g., 0.5 mm to 1.0 mm). The first roll 10 and the second roll 20 are respectively rotated at rotational speeds V1 and V2 in the directions indicated by arrows in FIG. 4 or in the reverse directions. A nitrile rubber 30 wound around the second roll 20 is masticated. This causes the molecular chain of the nitrile rubber to be moderately cut to produce free radicals. A carbon nanofiber generally has a structure in which the side surface is formed of a six-membered ring of carbon atoms and the end is closed by a five-membered ring. Since the carbon nanofiber has a forced structure, defects tend to occur, whereby radicals or functional groups tend to be formed at such defects. Therefore, free radicals of the nitrile rubber are easily bonded to the carbon nanofibers due to mastication.

Carbon nanofibers 40 with an average diameter of 0.5 to 500 nm are then supplied to a bank 34 of the nitrile rubber 30 wound around the second roll 20, and the mixture is mixed. The step of mixing the nitrile rubber 30 and the carbon nanofibers 40 is not limited to the open-roll method. The internal mixing method or the multi-screw extrusion kneading method may also be used.

After setting the distance d between the first roll 10 and the second roll 20 at preferably 0.5 mm or less, and more preferably 0 to 0.5 mm, the mixture is supplied to the open rolls and tight-milled two or more times. Tight milling is preferably performed about five to ten times, for example. When the surface velocity of the first roll 10 is referred to as V1 and the surface velocity of the second roll 20 is referred to as V2, the surface velocity ratio (V1/V2) of the first roll 10 to the second roll 20 during tight milling is preferably set at 1.05 to 3.00, and more preferably 1.05 to 1.2. A desired shear force can be obtained using such a surface velocity ratio. The tight-milled rubber composition is rolled using the rolls and sheeted. In the tight milling step, the nitrile rubber 30 is preferably tight-milled while setting the roll temperature at a relatively low temperature (i.e., preferably 0 to 50°C, and more preferably 5 to 30°C) in order to obtain a shear force as high as possible. The measured temperature of the nitrile rubber 30 is preferably adjusted to 0 to 50°C. This causes a high shear force to be applied to the nitrile rubber 30, whereby the aggregated carbon nanofibers 40 are separated so that the carbon nanofibers 40 are removed by the nitrile rubber molecules one by one and become dispersed in the nitrile rubber 30. In particular, since the nitrile rubber 30 has elasticity, viscosity, and chemical interaction with the carbon nanofibers 40, the carbon nanofibers 40 are easily dispersed in the nitrile rubber 30. As a result, a rubber composition in which the carbon nanofibers 40 exhibit excellent dispersibility and dispersion stability (i.e., the carbon nanofibers rarely reaggregate) can be obtained.

Specifically, when mixing the nitrile rubber and the carbon nanofibers using the open rolls, the nitrile rubber exhibiting viscosity enters the space between the carbon nanofibers, and a specific portion of the nitrile rubber is bonded to a highly active site of the carbon nanofiber through chemical interaction. When a high shear force is then applied to the nitrile rubber, the carbon nanofibers move along with the movement of the nitrile rubber molecules, whereby the aggregated carbon nanofibers are separated by the restoring force of the nitrile rubber due to elasticity which occurs after shearing, and become dispersed in the nitrile rubber. According to this embodiment, when the rubber composition is extruded through the narrow space between the rolls, the rubber composition is deformed to have a thickness greater than the roll distance as a result of the restoring force of the nitrile rubber due to elasticity. It is estimated that the above deformation causes the rubber composition to which a high shear force is applied to flow in a more complicated manner to disperse the carbon nanofibers in the nitrile rubber. The carbon nanofibers which have been dispersed are prevented from reaggregating due to the chemical interaction with the nitrile rubber, whereby excellent dispersion stability can be obtained.

In the step of dispersing the carbon nanofibers in the nitrile rubber by a shear force, the internal mixing method or the multi-screw extrusion kneading method may be used instead of the open-roll method. In other words, it suffices that a shear force sufficient to separate the aggregated carbon nanofibers be applied to the nitrile rubber. It is particularly preferable to use the open-roll method, since the actual temperature of the mixture can be measured and controlled while controlling the roll temperature.

In the method of producing a rubber composition, a crosslinking agent may be mixed into the rubber composition sheeted after tight milling, and the rubber composition may be crosslinked to obtain a crosslinked rubber composition. The rubber composition may be molded without crosslinking. The rubber composition may be used in the form of a sheet obtained using the open roll method. Or, the rubber composition may be formed into a desired shape (e.g., sheet) using a generally-used rubber molding method such as injection molding, transfer molding, press molding, extrusion molding, or calendering.

In the method of producing a rubber composition according to this embodiment, a compounding ingredient usually used when processing a nitrile rubber may be used. As the compounding ingredient, a known compounding ingredient may be used. As examples of the compounding ingredient, a crosslinking agent, a vulcanizing agent, a vulcanization accelerator, a vulcanization retarder, a softener, a plasticizer, a curing agent, a reinforcing agent, a filler, an aging preventive, a colorant, and the like can be given. These compounding ingredients may be added to the nitrile rubber before supplying the carbon nanofibers to the open rolls, for example.

The resulting rubber composition may be stacked on and bonded to the metal plate 76a via crosslinking bonding or the like to form the rubber section 76b. Or, the rubber composition may be dissolved in a solvent, and the resulting mixture may be applied by spray coating, roll coating, dipping, or the like and then heated to form the rubber section 76b.

As the nitrile rubber (abbreviated as "NBR"), a relatively wide range of acrylonitrile-butadiene copolymer synthetic rubber may be used insofar as the rubber is a naturally produced ecological material and exhibits rubber elasticity at room temperature. The properties of the nitrile rubber can be changed by adjusting the acrylonitrile content in the range of about 15 to 50%. For example, the nitrile rubber is classified as a low nitrile rubber (acrylonitrile content: less than 24%), a medium nitrile rubber (acrylonitrile content: 24 to 30%), a medium high nitrile rubber (acrylonitrile content: 30 to 36%), a high nitrile rubber (acrylonitrile content: 36 to 42%), and a very high nitrile rubber (acrylonitrile content: more than 42%). The average molecular weight of the nitrile rubber is preferably 50,000 or more, more preferably 70,000 or more, and particularly preferably about 100,000 to 500,000.

In the method of producing a rubber composition according to this embodiment, the carbon nanofibers are directly mixed into the nitrile rubber having rubber elasticity. Note that the method is not limited thereto. The following method may also be employed. Specifically, before mixing the carbon nanofibers into the nitrile rubber, the nitrile rubber is masticated to reduce the molecular weight of the nitrile rubber. Since the viscosity of the nitrile rubber decreases due to a decrease in molecular weight as a result of mastication, the nitrile rubber easily enters the space between the aggregated carbon nanofibers. The raw material nitrile rubber is a rubber elastic body of which the network component in uncrosslinked form has a first spin-spin relaxation time (T2n), measured for ¹H at 30°C by the Halm-echo method using the pulsed NMR technique, of 100 to 3000 microseconds. The raw material nitrile rubber is masticated to reduce the molecular weight of the nitrile rubber to obtain a liquid nitrile rubber having a first spin-spin relaxation time (T2n) of more than 3000 microseconds. The first spin-spin relaxation time (T2n) of the liquid nitrile rubber after mastication is preferably 5 to 30 times the first spin-spin relaxation time (T2n) of the raw material nitrile rubber before mastication. The above mastication is performed until the nitrile rubber is liquefied (i.e., until the nitrile rubber exhibits fluidity which is not suitable for mixing) by cutting the molecules of the nitrile rubber by applying a high shear force using the open-roll method or the like to reduce the molecular weight of the nitrile rubber to a large extent, differing from normal mastication performed in a state in which the nitrile rubber is solid. For example, when using the open-roll method, mastication is performed at a roll temperature of 20°C (minimum mastication time: 60 minutes) to 150°C (minimum mastication time: 10 minutes). The roll distance d is set at 0.1 to 1.0 mm, for example. The carbon nanofibers are then supplied to the liquid nitrile rubber obtained by mastication. However, since the elasticity of the liquid nitrile rubber has been significantly reduced, the aggregated carbon nanofibers are dispersed to only a small extent, even if the nitrile rubber and the carbon nanofibers are mixed in a state in which free radicals of the nitrile rubber are bonded to the carbon nanofibers.

Therefore, the molecular weight of the nitrile rubber in the mixture obtained by mixing the liquid nitrile rubber and the carbon nanofibers is increased to cause the nitrile rubber to recover its elasticity to obtain a rubber elastic body mixture, and the carbon nanofibers are uniformly dispersed in the nitrile rubber by tight milling using the open-roll method or the like. The network component of the rubber elastic body mixture in which the molecular weight of the nitrile rubber has been increased has a first spin-spin relaxation time (T2n), measured for ¹H at 30°C by the Hahn-echo method using the pulsed NMR technique, of 3000 microseconds or less. The first spin-spin relaxation time (T2n) of the rubber elastic body mixture in which the molecular weight of the nitrile rubber has been increased is preferably 0.5 to 10 times the first spin-spin relaxation time (T2n) of the raw material nitrile rubber before mastication. The elasticity of the rubber elastic body mixture may be expressed by the molecular form (which may be observed from the molecular weight) and the molecular mobility (which may be observed from the first spin-spin relaxation time (T2n)) of the nitrile rubber. The step of increasing the molecular weight of the nitrile rubber is preferably performed by placing the mixture in a heating furnace set at 40 to 100°C and heating the mixture for 10 to 100 hours, for example. This causes the molecular chain of the nitrile rubber to extend due to bonding between free radicals of the nitrile rubber in the mixture, whereby the molecular weight of the nitrile rubber increases. The molecular weight of the nitrile rubber may be increased in a short time by mixing a small amount (e.g., 1/2 or less of a normal amount) of a crosslinking agent into the mixture and heating (e.g., annealing) the mixture to effect a crosslinking reaction. When increasing the molecular weight of the nitrile rubber by a crosslinking reaction, it is preferable to set the amount of crosslinking agent, the heating time, and the heating temperature so that mixing in the subsequent step is not hindered.

According to the above-described method of producing the rubber section of the shim plate, the carbon nanofibers can be more uniformly dispersed in the nitrile rubber by reducing the viscosity of the nitrile rubber before supplying the carbon nanofibers. Specifically, the liquid nitrile rubber of which the molecular weight has been reduced easily enters the space between the aggregated carbon nanofibers as compared with the above-described method in which the carbon nanofibers are mixed into the nitrile rubber having a high molecular weight, whereby the carbon nanofibers can be more uniformly dispersed in the tight milling step. Since a large number of free radicals of the nitrile rubber produced by cutting the molecules of the nitrile rubber can be strongly bonded to the surface of the carbon nanofibers, the carbon nanofibers can be further uniformly dispersed. Therefore, the above-described production method enables an equivalent performance to be obtained with a reduced amount of carbon nanofibers, whereby economic efficiency can be improved by saving expensive carbon nanofibers.

The carbon nanofibers preferably have an average diameter of 0.5 to 500 nm, and more preferably 0.5 to 100 nm. The carbon nanofibers preferably have an average length of 0.01 to 1000 micrometers. The amount of carbon nanofibers added is not particularly limited, but may be appropriately determined depending on the application, the type and amount of other additives, and the like.

As examples of the carbon nanofibers, a carbon nanotube and the like can be given. As the carbon nanotube, a single-layer carbon nanotube having one rolled layer of a single graphite sheet having a hexagonal carbon network (single-walled carbon nanotube (SWNT)), a two-layer carbon nanotube having two rolled layers (double-walled carbon nanotube (DWNT)), a multi-layer carbon nanotube having three or more rolled layers (multi-walled carbon nanotube (MWNT)), or the like is appropriately used. A carbon material having a partial carbon nanotube structure may also be used. The carbon nanotube may also be referred to as a graphite fibril nanotube. Carbon nanofibers graphitized at about 2300°C to 3200°C together with a graphitization catalyst such as boron, boron carbide, beryllium, aluminum, and silicon may also be used.

A single-layer carbon nanotube or a multi-layer carbon nanotube is produced to a desired size using an arc discharge method, a laser ablation method, a vapor-phase growth method, or the like. In the arc discharge method, an arc is discharged between electrode materials made of carbon rods in an argon or hydrogen atmosphere at a pressure slightly lower than atmospheric pressure to obtain a multi-layer carbon nanotube deposited on the cathode. When a catalyst such as nickel/cobalt is mixed into the carbon rod and an arc is discharged, a single-layer carbon nanotube is obtained from soot adhering to the inner side surface of a processing vessel. In the laser ablation method, a target carbon surface into which a catalyst such as nickel/cobalt is mixed is irradiated with strong pulse laser light from a YAG laser in a noble gas (e.g., argon) to melt and vaporize the carbon surface to obtain a single-layer carbon nanotube. In the vapor-phase growth method, a carbon nanotube is synthesized by thermally decomposing hydrocarbons such as benzene or toluene in a vapor phase. As specific examples of the vapor-phase growth method, a floating catalyst method, a zeolite-supported catalyst method, and the like can be given. The carbon nanofibers may be provided with improved adhesion to and wettability with the elastomer by subjecting the carbon nanofibers to a surface treatment such as an ion-injection treatment, sputter-etching treatment, or plasma treatment before mixing the carbon nanofibers into the elastomer.

### 4. Examples

### 4.1. Natural rubber

Examples according to the invention using natural rubber as an elastomer are described below. Note that the invention is not limited to the following examples.

### (1) Preparation of samples of Examples 1 to 6 and Comparative Examples 1 to 6

A predetermined amount of natural rubber or a nitrile rubber (100 parts by weight (phr)) shown in Table 1 or 2 was supplied to 6-inch open rolls (roll temperature: 10 to 20°C, roll distance: 1.5 mm) and wound around the roll. After masticating the natural rubber or the nitrile rubber for five minutes, carbon nanofibers in an amount shown in Table 1 or carbon black in an amount shown in Table 2 was supplied to the resulting product. The mixture was then removed from the open rolls. After reducing the roll distance from 1.5 mm to 0.3 mm, the mixture was again supplied to the open rolls and tight-milled five times. The surface velocity ratio of the two rolls was set at 1.1. After setting the roll distance at 1.1 mm, the rubber composition obtained by tight milling was supplied to the rolls and sheeted.

The sheeted rubber composition was press-molded at 90°C for five minutes to obtain uncrosslinked sheet-shaped rubber composition samples with a thickness of 1 mm. A peroxide (crosslinking agent) was added to the sheeted rubber compositions of Examples 1 to 3 and 5 and Comparative Examples 1 to 6. The mixture was mixed using open rolls and sheeted at a roll distance of 1.1 mm. The sheeted rubber compositions were press-molded at 175°C for 20 minutes to obtain crosslinked rubber composition samples of Examples 1 to 3 and 5 and Comparative Examples 1 to 6.

In Tables 1 and 2, "NR" indicates a raw material natural rubber (average molecular weight: 3,000,000), "NBR (high nitrile rubber)", "NBR (medium high nitrile rubber)", and "NBR (low nitrile rubber)" indicate raw material nitrile rubbers differing in nitrile content, "MWNT13" indicates vapor-grown multi-walled carbon nanotubes with an average diameter of about 13 nm, "MWNT100" indicates vapor-grown multi-walled carbon nanotubes with an average diameter of about 100 nm, "carbon fiber" indicates pitch-based carbon fibers with an average diameter of 28 micrometers and an average fiber length of about 2 mm, and "HAF" indicates HAF carbon black.

### (2) Measurement using pulsed NMR technique

The uncrosslinked rubber composition samples of Examples 1 to 6 and Comparative Examples 1 to 6 were subjected to measurement by the Hahn-echo method using the pulsed NMR technique. The measurement was conducted using a JMN-MU25 manufactured by JEOL, Ltd. The measurement was conducted under conditions of an observing nucleus of ¹H, a resonance frequency of 25 MHz, and a 90-degree pulse width of 2 microseconds. A decay curve was determined while changing Pi in the pulse sequence (90°x-Pi-180°x) of the Hahn-echo method. The measurement was conducted in a state in which the sample was inserted into a sample tube within an appropriate magnetic field range. The measurement temperature was 30°C and 150°C (shown in the parenthesis in Tables 1 and 2). The first spin-spin relaxation time (T2n/30°C) of the raw material rubber and the first spin-spin relaxation time (T2n/150°C) and the fraction (fnn/150°C) of components having the second spin-spin relaxation time (T2nn/150°C) of each sample were determined by the measurement. The measurement results are shown in Tables 1 and 2.

### (3) Thermomechanical analysis (TMA)

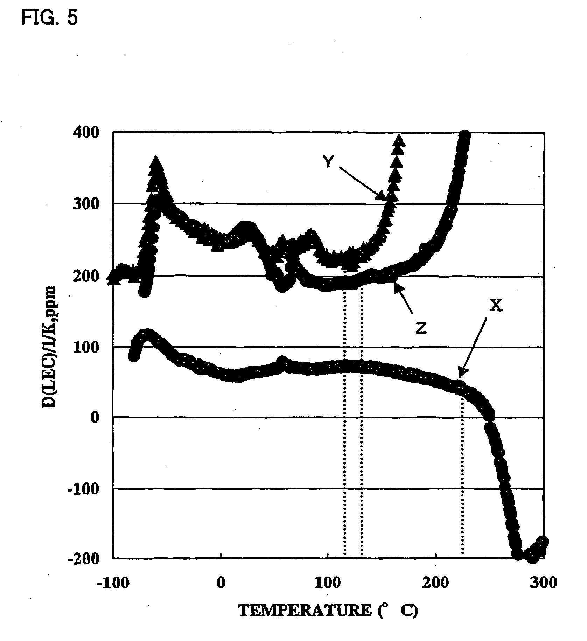

Specimens (1.5 mm × 1.0 mm × 10 mm) were prepared by cutting the crosslinked rubber composition samples of Examples 1 to 3 and 5 and Comparative Examples 1 to 6 and the uncrosslinked rubber composition samples of Examples 4 and 6. The coefficient of linear expansion of each specimen was measured using a thermomechanical analyzer (TMASS) manufactured by SII at a load of 25 KPa, a measurement temperature of -80 to 350°C, and a temperature increase rate of 2°C/minute. The deterioration start temperature at which softening deterioration or curing deterioration started to occur was determined from the temperature-dependent change characteristics of the resulting coefficient of linear expansion. The results are shown in Tables 1 and 2. The deterioration start temperature is described below using Example 5 and Comparative Examples 1 and 2 with reference to FIG 5. FIG. 5 is a graph giving temperature (°C) versus differential coefficient of linear expansion (ppm/K) showing a temperature-dependent change in differential coefficient of linear expansion for Example 5 (X in FIG 5), Comparative Example 1 (Y in FIG 5), and Comparative Example 2 (Z in FIG. 5). Example 5 (X) indicates crosslinking curing deterioration (shrinkage). It was determined that deterioration started to occur at the point at which the coefficient of linear expansion changed to a large extent in FIG. 5 (deterioration start temperature: 219°C). Comparative Example 1 (Y) and Comparative Example 2 (Z) indicate chain-cutting softening deterioration (expansion). It was determined that deterioration started to occur at the point at which the coefficient of linear expansion changed to a large extent in FIG 5 (deterioration start temperature: 116°C and 128°C, respectively).

### (4) Dynamic viscoelasticity test

Specimens were prepared by cutting the crosslinked rubber composition samples of Examples 1 to 3 and 5 and Comparative Examples 1 to 6 and the uncrosslinked rubber composition samples of Examples 4 and 6 in the shape of a strip (40x1x5 (width) mm). Each specimen was subjected to a dynamic viscoelasticity test using a dynamic viscoelasticity tester DMS6100 manufactured by SII at a chuck distance of 20 mm, a measurement temperature of -100 to 300°C, a dynamic strain of ±0.05%, and a frequency of 10 Hz in accordance with JIS K6394 to measure the dynamic modulus of elasticity (E', MPa) and the loss tangent (tandelta). Tables 1 and 2 show the measurement results of the dynamic modulus of elasticity (E') at a measurement temperature of 30°C and 150°C. Tables 1 and 2 show the measurement results of the loss tangent (tandelta) at a measurement temperature of -10°C, 30°C, and 150°C. Tables 1 and 2 also show the peak temperature of the loss tangent (tandelta) in the region near the glass transition temperature (Tg) as the minimum use temperature (°C). The minimum use temperature refers to the critical use temperature of a shim plate rubber composition. The rubber composition loses its cushioning properties in the temperature region lower than the minimum use temperature due to an increase in hardness.

**TABLE 1**

| | | Example 1 | Example 2 | Example 3 | Example 4 | Examples 5 | Example 6 |
|---|---|---|---|---|---|---|---|
| Component | NR (phr) | 100 | 100 | 100 | 100 | 100 | 100 |
| | MWNT13 (phr) | 20 | 60 | 80 | 80 | 0 | 0 |
| | MWNT100(phr) | 0 | 0 | 0 | 0 | 150 | 150 |
| | Carbon fiber (phr) | 0 | 0 | 0 | 0 | 0 | 0 |
| | HAF (phr) | 0 | 0 | 0 | 0 | 0 | 0 |
| Raw material NR | T2n (30°C) (microsecond) | 700 | 700 | 700 | 700 | 700 | 700 |
| Measurement results for uncrosslinked form using pulsed NMR technique | T2n (150°C) (microsecond) | 1700 | 1210 | 1100 | 1100 | 1880 | 1880 |
| | (nn (150°C) | 0.06 | 0 | 0 | 0 | 0.19 | 0.19 |
| Crosslinking | | Crosslinked | Crosslinked | Crosslinked | Uncrosslinked | Crosslinked | Uncrosslinked |
| DMS measurement results | Minimum use temperature (°C) | -59.28 | -59.86 | -59.55 | -622 | -53.16 | -54.38 |
| Measurement results of dynamic viscocinsticity test | Deterioration start temperature (°C) | 175 | 228 | 227 | 200 | 219 | 220 |
| | E'(30°C) (MPa) | 24.6 | 222 | 498 | 518 | 1000 | 458 |
| | E'(150°C) (MPa) | 13.6 | 71.9 | 194 | 229 | 411 | 190 |
| | tandelta (-10°C) | 0.10 | 0.12 | 0.11 | 0.11 | 0.24 | 0.25 |
| | tandelta (30°C) | 0.10 | 0.12 | 0.12 | 0.1 | 0.25 | 0.26 |
| | tandelta (150°C) | 0.08 | 0.08 | 0.11 | 0.1 | 0.21 | 0.20 |

**TABLE 2**

| | | Comparative Example 1 | Comparative Example 2 | Comparative Example 3 | Comparative Example 4 | Comparative Example 5 | Comparative Example 6 |
|---|---|---|---|---|---|---|---|
| Component | NR (phr) | 100 | 100 | 100 | 0 | 0 | 0 |
| | NBR (high nitrile rubber) (phr) | 0 | 0 | 0 | 100 | 0 | 0 |
| | NBR (medium high nitrile rubber) (phr) | 0 | 0 | 0 | 0 | 100 | 0 |
| | NBR (low nitrile rubber) (phr) | 0 | 0 | 0 | 0 | 0 | 100 |
| | MWNT13 (phr) | 0 | 0 | 0 | 0 | 0 | 0 |
| | MWNT100 (phr) | 0 | 0 | 0 | 0 | 0 | 0 |
| | Carbon fiber (phr) | 0 | 0 | 60 | 0 | 0 | 0 |
| | HAF (phr) | 0 | 60 | 0 | 60 | 60 | 60 |
| Raw material NR | T2n (30°C) (microsecond) | 700 | 700 | 700 | 220 | 260 | 330 |
| Measurement results for uncrosslinked form using pulsed NMR technique | T2n (150°C) (microsecond) | 6240 | 7310 | 7200 | 3600 | 4000 | 4600 |
| | (nn (150°C) | 0.33 | 0.33 | 0.35 | 0.34 | 0.34 | 0.41 |
| Crosslinking | | Crosslinked | Crosslinked | Crosslinked | Crosslinked | Crosslinked | Crosslinked |
| DMS measurement results | Minimum use temperature **(°C)** | -56.1 | -58.5 | -52.3 | -14.0 | -20.6 | -40.5 |
| Measurement results or dynamic viscoelasticity test | Deterioration start temperature (°C) | 116 | 128 | 112 | 152 | 152 | 143 |
| | E' (30°C) (MPa) | 1.5 | 22.9 | 9.4 | 17.8 | 20.0 | 21.1 |
| | E' (150°C) (MPa) | | | | 9.7 | 13.8 | - |
| | tandelta (-10°C) | 0.11 | 0.13 | 0.09 | 0.90 | 0.41 | 0.13 |
| | tandelta (30°C) | 0.06 | 0.13 | 0.07 | 0.20 | 0.15 | 0.08 |
| | tandelta (150°C) | - | - | - | 0.09 | 0.07 | - |

As is clear from Tables 1 and 2, the following items were confirmed from Examples 1 to 6 according to the invention. Specifically, the deterioration start temperatures (150°C or more) of the rubber composition samples of Examples 1 to 6 according to the invention were higher than the deterioration start temperatures of the rubber composition samples of Comparative Examples 1 to 6. Therefore, when using the rubber compositions of Examples 1 to 6 for a rubber section of a shim plate, the maximum usable temperature of the shim plate can be set at 150°C or more.

The rubber compositions of Examples 1 to 6 according to the invention had a dynamic modulus of elasticity (E') at 150°C of 5 MPa or more. This indicates that the rubber compositions of Examples 1 to 6 maintained high rigidity at a high temperature. Since the deterioration start temperatures of the rubber compositions of Comparative Examples 1 to 3 were 112 to 128°C, the dynamic modulus of elasticity (E') at 150°C of the rubber compositions of Comparative Examples 1 to 3 was not measured due to softening. The rubber compositions of Examples 1 to 6 according to the invention had a dynamic modulus of elasticity (E') at room temperature (30°C) of 20 MPa or more which is higher than those of the rubber compositions of Comparative Examples 1 to 3. This indicates that the rubber compositions of Examples 1 to 6 had high rigidity at room temperature (30°C).

The rubber compositions of Examples 1 to 6 according to the invention had a loss tangent (tandelta) at 150°C of 0.05 or more. This indicates that the rubber compositions of Examples 1 to 6 maintained high attenuation characteristics at a high temperature. Since the deterioration start temperatures of the rubber compositions of Comparative Examples 1 to 3 were 112 to 128°C, the loss tangent (tandelta) at 150°C of the rubber compositions of Comparative Examples 1 to 3 was not measured due to softening. The rubber compositions of Examples 1 to 6 according to the invention had a loss tangent (tandelta) at a low temperature (-10°C) of 0.1 or more and a loss tangent (tandelta) at room temperature (30°C) of 0.1 or more. This indicates that the rubber compositions of Examples 1 to 6 had relatively high attenuation characteristics at these temperatures.

The rubber compositions of Examples 1 to 6 according to the invention had a minimum use temperature measured by the dynamic viscoelasticity test of -50°C or less. This indicates that the rubber compositions of Examples 1 to 6 are flexible and can be used for a rubber section of a shim plate at a low temperature as compared with the nitrile rubber of Comparative Examples 4 to 6.

### 4.2. Ethylene-propylene rubber

Examples according to the invention using an ethylene-propylene rubber as an elastomer are described below. Note that the invention is not limited to the following examples.

### (5) Preparation of samples of Examples 1a to 5a and Comparative Examples 1a to 3a

(a) A Brabender (internal mixer) (chamber temperature: 20°C) was charged with a predetermined amount (100 g) of an ethylene-propylene rubber (100 parts by weight (phr)) shown in Table 3.
(b) Carbon nanofibers were added to the ethylene-propylene rubber in an amount (parts by weight (phr)) shown in Table 3.
(c) After the addition of the carbon nanofibers, the mixture of the ethylene-propylene rubber and the carbon nanofibers was mixed (masticated) and then removed from the rotors.
(d) The mixture obtained by (c) was placed between rotors of an internal mixer set at a temperature of 20°C, subjected to a first mixing step for 10 minutes, and then removed from the rotors.
(e) The mixture obtained by (d) was supplied to an internal mixer set at 100°C, subjected to a second mixing step for 10 minutes, and then removed from the internal mixer.
(f) The mixture obtained by (e) was supplied to 6-inch open rolls at a roll distance (nip) of 0.3 mm and a roll temperature of 20°C, and then tight-milled ten times (third mixing step). The tight-milled mixture was rolled and sheeted to a thickness of about 1.1 mm. The sheeted rubber composition was press-molded at 90°C for five minutes to obtain sheet-shaped uncrosslinked rubber composition samples with a thickness of 1 mm. A peroxide (crosslinking agent) was added to the sheeted rubber compositions of Examples 1a to 4a and Comparative Examples 1a to 3a. The mixture was mixed using open rolls and sheeted at a roll distance of 1.1 mm. The sheeted rubber compositions were press-molded at 175°C for 20 minutes to obtain crosslinked rubber composition samples of Examples 1 a to 4a and Comparative Examples 1 a to 3 a.

In Tables 3 and 4, "EPDM" indicates an ethylene-propylene rubber manufactured by JSR Corporation (EPDM: ethylene-propylene-diene copolymer rubber) (EP103AF), "MWNT13" indicates vapor-grown multi-walled carbon nanotubes with an average diameter of about 13 nm, "MWNT100" indicates vapor-grown multi-walled carbon nanotubes with an average diameter of about 100 nm, "carbon fiber" indicates pitch-based carbon fibers with an average diameter of 28 micrometers and an average fiber length of about 2 mm, and "HAF" indicates HAF carbon black.

### (6) Preparation of samples of Comparative Examples 4a to 6a

A predetermined amount of a nitrile rubber (100 parts by weight (phr)) shown in Table 4 was supplied to 6-inch open rolls (roll temperature: 10 to 20°C, roll distance: 1.5 mm) and wound around the roll. After masticating the nitrile rubber for five minutes, carbon black in an amount shown in Table 4 was supplied to the resulting product. The mixture was then removed from the open rolls. After reducing the roll distance from 1.5 mm to 0.3 mm, the mixture was again supplied to the open rolls and tight-milled five times. The surface velocity ratio of the two rolls was set at 1.1. After setting the roll distance at 1.1 mm, the rubber composition obtained by tight milling was supplied to the rolls and sheeted.

The sheeted rubber composition was press-molded at 90°C for five minutes to obtain sheet-shaped uncrosslinked rubber composition samples with a thickness of 1 mm. A peroxide (crosslinking agent) was added to the sheeted rubber compositions of Comparative Examples 4 to 6. The mixture was mixed using open rolls and sheeted at a roll distance of 1.1 mm. The sheeted rubber compositions were press-molded at 175°C for 20 minutes to obtain crosslinked rubber composition samples of Comparative Examples 4 to 6.

In Table 4, "NBR (high nitrile rubber)", "NBR (medium high nitrile rubber)", and "NBR (low nitrile rubber)" indicate raw material nitrile rubbers differing in nitrile content.

### (7) Measurement using pulsed NMR technique

The uncrosslinked rubber composition samples of Examples 1a to 5a and Comparative Examples 1a to 6a were subjected to measurement by the Hahn-echo method using the pulsed NMR technique. The measurement was conducted using a JMN-MU25 manufactured by JEOL, Ltd. The measurement was conducted under conditions of an observing nucleus of ¹H, a resonance frequency of 25 MHz, and a 90-degree pulse width of 2 microseconds. A decay curve was determined while changing Pi in the pulse sequence (90°x-Pi-180°x) of the Hahn-echo method. The measurement was conducted in a state in which the sample was inserted into a sample tube within an appropriate magnetic field range. The measurement temperature was 30°C and 150°C (shown in the parenthesis in Tables 3 and 4). The first spin-spin relaxation time (T2n/30°C) of the raw material rubber and the first spin-spin relaxation time (T2n/150°C) and the fraction (fnn/150°C) of components having the second spin-spin relaxation time (T2nn/150°C) of each sample were determined by the measurement. The measurement results are shown in Tables 3 and 4.

### (8) Thermomechanical analysis (TMA)

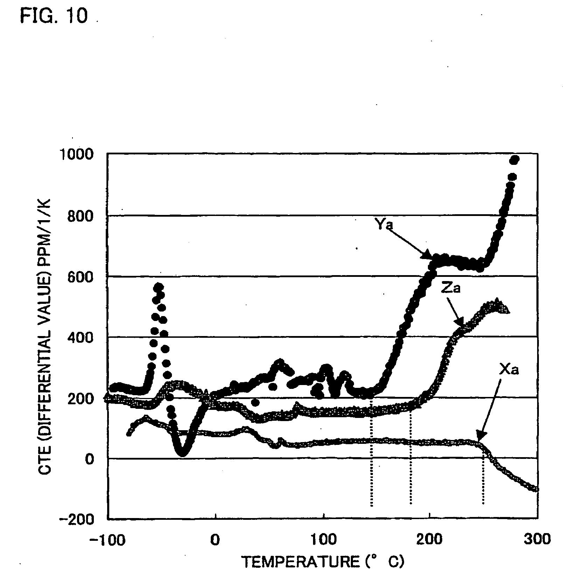

Specimens (1.5 mm × 1.0 mm × 10 mm) were prepared by cutting the crosslinked rubber composition samples of Examples 1a to 4a and Comparative Examples 1a to 6a and the crosslinked rubber composition sample of Example 5. The coefficient of linear expansion of each specimen was measured using a thermomechanical analyzer (TMASS) manufactured by SII at a load of 25 KPa, a measurement temperature of -80 to 350°C, and a temperature increase rate of 2°C/minute. The deterioration start temperature at which softening deterioration or curing deterioration starts to occur was determined from the temperature change characteristics of the resulting coefficient of linear expansion. The results are shown in Tables 3 and 4. The deterioration start temperature is described below using Example 4a and Comparative Examples 1a and 2a with reference to FIG. 10. FIG. 10 is a graph giving temperature (°C) versus differential coefficient of linear expansion (ppm/K) showing a temperature-dependent change in differential coefficient of linear expansion of Example 4a (Xa in FIG 10), Comparative Example 1a (Ya in FIG 10), and Comparative Example 2a (Za in FIG 10). Example 4a (Xa) indicates crosslinking curing deterioration (shrinkage). It was determined that deterioration started to occur at the point at which the coefficient of linear expansion changed to a large extent in FIG 10 (deterioration start temperature: 251°C). Comparative Example 1a (Ya) and Comparative Example 2a (Za) indicate chain-cutting softening deterioration (expansion). It was determined that deterioration started to occur at the point at which the coefficient of linear expansion changed to a large extent in FIG 10 (deterioration start temperature: 144°C and 176°C, respectively).

### (9) Dynamic viscoelasticity test

Specimens were prepared by cutting the crosslinked rubber composition samples of Examples 1a to 4a and Comparative Example 1a to 6a and the uncrosslinked rubber composition sample of Example 5a in the shape of a strip (40×1×5 (width) mm). Each specimen was subjected to a dynamic viscoelasticity test using a dynamic viscoelasticity tester DMS6100 manufactured by SII at a chuck distance of 20 mm, a measurement temperature of -100 to 300°C, a dynamic strain of ±0.05%, and a frequency of 10 Hz in accordance with JIS K6394 to measure the dynamic modulus of elasticity (E', MPa) and the loss tangent (tandelta). Tables 3 and 4 show the measurement results of the dynamic modulus of elasticity (E') at a measurement temperature of 30°C and 200°C. Tables 3 and 4 show the measurement results of the loss tangent (tandelta) at a measurement temperature of -10°C, 30°C, and 200°C. Tables 3 and 4 also show the peak temperature of the loss tangent (tandelta) in the region near the glass transition temperature (Tg) as the minimum use temperature (°C). The minimum use temperature refers to the critical use temperature of a shim plate rubber composition. The rubber composition loses its cushioning properties in the temperature region lower than the minimum use temperature due to an increase in hardness.

**TABLE 3**

| | | Example 1a | Example 2a | Example 3a | Example 4a | Example 5a |
|---|---|---|---|---|---|---|
| Component | EPDM (phr) | 100 | 100 | 100 | 100 | 100 |
| | MWNT13 (phr) | 0 | 0 | 20 | 60 | 60 |
| | MWNT100(phr) | 60 | 120 | 0 | 0 | 0 |
| | Carbon fiber (phr) | 0 | 0 | 0 | 0 | 0 |
| | HAF (phr) | 0 | 0 | 0 | 0 | 0 |
| Raw material EPDM | T2n (30°C) (microsecond) | 520 | 520 | 520 | 520 | 520 |
| Measurement results for uncrosslinked form using pulsed NMR technique | T2n (150°C) (microsecond) | 1800 | 1770 | 1410 | 1130 | 1130 |
| | fnn (150°C) | 0.19 | 0.12 | 0.16 | 0 | 0 |
| Crosslinking | | Crosslinked | Crosslinked | Crosslinked | Crosslinked | Uncrosslinked |
| DMS measurement results | Minimum use temperature (°C) | -39.11 | -37.6 | -55 | -50.95 | -52.33 |
| Measurement results or dynamic viscoelasticity test | Deterioration start temperature (°C) | 201 | 208 | 206 | 251 | 262 |
| | E'(30°C)(MPa) | 167 | 503 | 45 | 267 | 533 |
| | E'(200°C)(MPa) | 40.2 | 107 | 16.0 | 59.9 | 116 |
| | tandelta (-10°C) | 0.27 | 0.27 | 0.11 | 0.10 | 0.10 |
| | tandelta (30°C) | 0.27 | 0.30 | 0.10 | 0.12 | 0.11 |
| | tandelta (200°C) | 0.12 | 0.19 | 0.06 | 0.08 | 0.10 |

**TABLE4**

| | | Comparative Example 1a | Comparative Example 2a | Comparative Example 3a | Comparative Example 4a | Comparative Example 5a | Comparative Example 6a |
|---|---|---|---|---|---|---|---|
| Component | EPDM (phr) | 100 | 100 | 100 | 0 | 0 | 0 |
| | NBR (high nitrile rubber) (phr) | 0 | 0 | 0 | 100 | 0 | 0 |
| | NBR (medium high nitrile rubber) (phr) | 0 | 0 | 0 | 0 | 100 | 0 |
| | NBR (low nitrile rubber) (phr) | 0 | 0 | 0 | 0 | 0 | 100 |
| | Carbon fiber (phr) | 0 | 0 | 60 | 0 | 0 | 0 |
| | NAF (phr) | 0 | 60 | 0 | 60 | 60 | 60 |
| Raw material EPDM | T2n (30°C) (microsecond) | 520 | 520 | 520 | 220 | 260 | 330 |
| Measurement results for uncrosslinked form using pulsed NMR technique | T2n (150°C) (microsecond) | 2200 | 1800 | 2300 | 3600 | 4000 | 4600 |
| | fnn (150°C) | 0.23 | 0.21 | 0.24 | 0.34 | 0.38 | 0.41 |
| Crosslinking | | Crosslinked | Crosslinked | Crosslinked | Crosslinked | Crosslinked | Crosslinked |
| DMS measurement results | Minimum use temperature (°C) | -48.99 | -38.9 | -42.1 | -14.0 | -20.6 | -40.5 |
| Measurement results of dynamic viscoelasticity test | Deterioration start temperature (°C) | 144 | 176 | 158 | 152 | 152 | 143 |
| | E' (30°C) (MPa) | 3.6 | 25.2 | 44.5 | 17.8 | 20.0 | 21.1 |
| | E' (200°C) (MPa) | - | - | - | - | - | - |
| | tandelta (-10°C) | 0.02 | 0.07 | 0.08 | 0.90 | 0.41 | 0.13 |
| | tandelta (30°C) | 0.03 | 0.08 | 0.09 | 0.20 | 0.15 | 0.08 |
| | tandelta (200°C) | - | - | - | - | - | - |

As is clear from Tables 3 and 4, the following items were confirmed from Examples 1a to 5a according to the invention. Specifically, the deterioration start temperatures (200°C or more) of the rubber composition samples of Examples 1a to 5a according to the invention were higher than the deterioration start temperatures of the rubber composition samples of Comparative Examples 1a to 6a. Therefore, when using the rubber compositions of Examples 1a to 5a for a rubber section of a shim plate, the maximum usable temperature of the shim plate can be set at 200°C or more.

The rubber compositions of Examples 1 a to 5a according to the invention had a dynamic modulus of elasticity (E') at 200°C of 10 MPa or more. This indicates that the rubber compositions of Examples 1a to 5a maintained high rigidity at a high temperature. Since the deterioration start temperatures of the rubber compositions of Comparative Examples 1a to 6a were 143 to 176°C, the dynamic modulus of elasticity (E') at 200°C of the rubber compositions of Comparative Examples 1 a to 6a was not measured due to softening. The rubber compositions of Examples 1a to 5a according to the invention had a dynamic modulus of elasticity (E') at room temperature (30°C) of 45 MPa or more which is higher than those of the rubber compositions of Comparative Examples 1a to 6a. This indicates that the rubber compositions of Examples 1a to 5a had high rigidity at room temperature (30°C).

The rubber compositions of Examples 1a to 5a according to the invention had a loss tangent (tandelta) at 200°C of 0.05 or more. This indicates that the rubber compositions of Examples 1a to 5a maintained high attenuation characteristics at a high temperature. Since the deterioration start temperatures of the rubber compositions of Comparative Examples 1a to 6a were 143 to 176°C, the loss tangent (tandelta) at 200°C of the rubber compositions of Comparative Examples 1 a to 6a was not measured due to softening. The rubber compositions of Examples 1a to 5a according to the invention had a loss tangent (tandelta) at a low temperature (-10°C) of 0.1 or more and a loss tangent (tandelta) at room temperature (30°C) of 0.1 or more. This indicates that the rubber compositions of Examples 1a to 5a had relatively high attenuation characteristics at these temperatures.

The rubber compositions of Examples 1a to 5a according to the invention had a minimum use temperature measured by the dynamic viscoelasticity test of -30°C or less. This indicates that the rubber compositions of Examples 1a to 5a can be used for a rubber section of a shim plate at a low temperature.

### 4.3. Nitrile rubber

Examples according to the invention using a nitrile rubber as an elastomer are described below. Note that the invention is not limited to the following examples.

### (10) Preparation of samples of Examples 1b to 6b and Comparative Examples 1b to 6b

A predetermined amount of a nitrile rubber (100 parts by weight (phr)) shown in Tables 5 and 6 was supplied to 6-inch open rolls (roll temperature: 10 to 20°C, roll distance: 1.5 mm) and wound around the roll. After masticating the nitrile rubber for five minutes, carbon nanofibers in an amount shown in Table 5 or carbon black in an amount shown in Table 6 was supplied to the resulting product. The mixture was then removed from the open rolls. After reducing the roll distance from 1.5 mm to 0.3 mm, the mixture was again supplied to the open rolls and tight-milled five times. The surface velocity ratio of the two rolls was set at 1.1. After setting the roll distance at 1.1 mm, the rubber composition obtained by tight milling was supplied to the rolls and sheeted.

The sheeted rubber composition was press-molded at 90°C for five minutes to obtain sheet-shaped uncrosslinked rubber composition samples with a thickness of 1 mm. A peroxide (crosslinking agent) was added to the sheeted rubber compositions of Examples 1b and 3b to 6b and Comparative Examples 1b to 6b. The mixture was mixed using open rolls and sheeted at a roll distance of 1.1 mm. The sheeted rubber compositions were press-molded at 175°C for 20 minutes to obtain crosslinked rubber composition samples of Examples 1b and 3b to 6b and Comparative Examples 1b to 6b.

In Tables 5 and 6, "NBR (high nitrile rubber)", "TMR (medium high nitrile rubber)", and "NBR (low nitrile rubber)" were used as the raw material nitrile rubbers. In Tables 5 and 6, "MWNT13" indicates vapor-grown multi-walled carbon nanotubes with an average diameter of about 13 nm, "MWNT100" indicates vapor-grown multi-walled carbon nanotubes with an average diameter of about 100 nm, and "HAF" indicates HAF carbon black.

### (11) Measurement using pulsed NMR technique

The uncrosslinked rubber composition samples of Examples 1b to 6b and Comparative Examples 1b to 6b were subjected to measurement by the Hahn-echo method using the pulsed NMR technique. The measurement was conducted using a JMN-MU25 manufactured by JEOL, Ltd. The measurement was conducted under conditions of an observing nucleus of ¹H, a resonance frequency of 25 MHz, and a 90-degree pulse width of 2 microseconds. A decay curve was determined while changing Pi in the pulse sequence (90°x-Pi-180°x) of the Halm-echo method. The measurement was conducted in a state in which the sample was inserted into a sample tube within an appropriate magnetic field range. The measurement temperature was 30°C and 150°C (shown in the parenthesis in Tables 5 and 6). The first spin-spin relaxation time (T2n/30°C) of the raw material rubber and the first spin-spin relaxation time (T2n/150°C) and the fraction (fnn/150°C) of components having the second spin-spin relaxation time (T2nn/150°C) of each sample were determined by the measurement. The measurement results are shown in Tables 5 and 6.

### (12) Thermomechanical analysis (TMA)

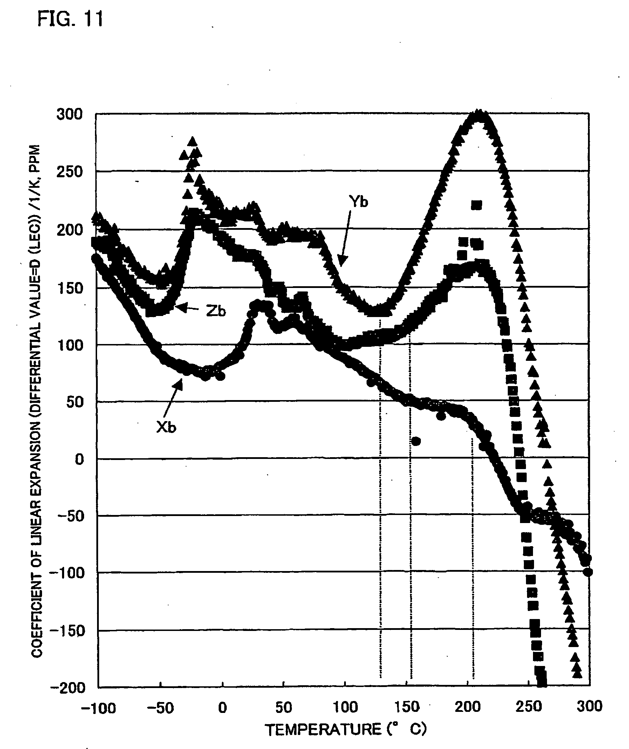

Specimens (1.5 mm × 1.0 mm × 10 mm) were prepared by cutting the crosslinked rubber composition samples of Examples 1b and 3b to 6b and Comparative Examples 1b to 6b and the crosslinked rubber composition sample of Example 2b. The coefficient of linear expansion of each specimen was measured using a thermomechanical analyzer (TMASS) manufactured by SII at a load of 25 KPa, a measurement temperature of -80 to 350°C, and a temperature increase rate of 2°C/minute. The deterioration start temperature at which softening deterioration or curing deterioration starts to occur was determined from the temperature change characteristics of the resulting coefficient of linear expansion. The results are shown in Tables 5 and 6. The deterioration start temperature is described below using Example 4b and Comparative Examples 3b and 4b with reference to FIG 11. FIG. 11 is a graph giving temperature (°C) versus differential coefficient of linear expansion (ppm/K) showing a temperature-dependent change in differential coefficient of linear expansion of Example 4b (Xb in FIG 11), Comparative Example 3b (Yb in FIG 11), and Comparative Example 4b (Zb in FIG 11). Example 4b (Xb) indicates crosslinking curing deterioration (shrinkage). It was determined that deterioration started to occur at the point at which the coefficient of linear expansion changed to a large extent in FIG. 11 (deterioration start temperature: 204°C). Comparative Example 3b (Yb) and Comparative Example 4b (Zb) indicate chain-cutting softening deterioration (expansion). It was determined that deterioration started to occur at the point at which the coefficient of linear expansion changed to a large extent in FIG 11 (deterioration start temperature: 127°C and 152°C, respectively).

### (13) Dynamic viscoelasticity test

Specimens were prepared by cutting the crosslinked rubber composition samples of Examples 1b and 3b to 6b and Comparative Examples 1b to 6b and the uncrosslinked rubber composition sample of Example 2b in the shape of a strip (40x 1 x5 (width) mm). Each specimen was subjected to a dynamic viscoelasticity test using a dynamic viscoelasticity tester DMS6100 manufactured by SII at a chuck distance of 20 mm, a measurement temperature of -100 to 300°C, a dynamic strain of ±0.05%, and a frequency of 10 Hz in accordance with JIS K6394 to measure the dynamic modulus of elasticity (E', MPa) and the loss tangent (tandelta). Tables 5 and 6 show the measurement results of the dynamic modulus of elasticity (E') at a measurement temperature of 30°C and 200°C. Tables 5 and 6 show the measurement results of the loss tangent (tandelta) at a measurement temperature of -10°C, 30°C, and 200°C. Tables 5 and 6 also show the peak temperature of the loss tangent (tandelta) in the region near the glass transition temperature (Tg) as the minimum use temperature (°C). The minimum use temperature refers to the critical use temperature of a shim plate rubber composition. The rubber composition loses its cushioning properties in the temperature region lower than the minimum use temperature due to an increase in hardness.

**TABLE 5**

| | | Example 1b | Example 2b | Example 3b | Example 4b | Example 5b | Example 6b |
|---|---|---|---|---|---|---|---|
| Component | NBR (high nitrile rubber) (phr) | 100 | 100 | 0 | 0 | 0 | 0 |
| | NMR (phut) nitrile rubber) | 0 | 0 | 100 | 100 | 100 | 0 |
| | NBR (low nitrile rubber) (phr) | 0 | 0 | 0 | 0 | 0 | 100 |
| | MWNT13 (phr) | 60 | 60 | 20 | 60 | 0 | 60 |
| | MWNT100 (phr) | 0 | 0 | 0 | 0 | 60 | 0 |
| | HAF (phr) | 0 | 0 | 0 | 0 | 0 | 0 |
| Raw material NBR | T2n (30°C) (microsecond) | 220 | 220 | 260 | 260 | 260 | 330 |
| Measurement results for uncrosslinked form using pulsed NMR technique | T2n (150°C) (microsecond) | 900 | 900 | 1800 | 1140 | 1900 | 1400 |
| | fnn (150°C) | 0 | 0 | 0.13 | 0 | 0.05 | 0.06 |
| Crosslinking | | Crosslinked | Uncrosslinked | Crosslinked | Crosslinked | Crosslinked | Crosslinked |
| DMS measurement results | Minimum use temperature (°C) | -10.7 | -11.84498 | -14.57888 | -18.7 | -17.2 | -36.8 |
| Measurement results of dynamic viscoelasticity test | Deterioration start temperature (°C) | 236 | 227 | 203 | 204 | 214 | 272 |
| | E' (30°C) (MPa) | 324 | 107 | 25.5 | 327 | 55.5 | 108 |
| | E' (200°C) (MPa) | 66.9 | 25.1 | 13.8 | 94.9 | 12.7 | 69.6 |
| | tundelta (-10°C) | 0.29 | 0.29 | 0.38 | 0.21 | 0.27 | 0.14 |
| | tandelta (30°C) | 0.14 | 0.14 | 0.14 | 0.14 | 0.27 | 0.11 |
| | tandelta (200-C) | 0.10 | 0.11 | 0.05 | 0.11 | 0.17 | 0.06 |

**TABLE 6**

| | | Comparative Example 1b | Comparative Example 2b | Comparative Example 3b | Comparative Example 4b | Comparative Example 5b | Comparative Example 6b |
|---|---|---|---|---|---|---|---|
| Component | NBR (high nitrile rubber) (phr) | 100 | 100 | 0 | 0 | 0 | 0 |
| | NBR (medium high nitrile rubber) (phr) | 0 | 0 | 100 | 100 | 0 | 0 |
| | NBR (low nitrile rubber) (phr) | 0 | 0 | 0 | 0 | 100 | 100 |
| | MWNT13 (phr) | 0 | 0 | 0 | 0 | 0 | 0 |
| | MWNT100(phr) | 0 | 0 | 0 | 0 | 0 | 0 |
| | HAF (phr) | 0 | 60 | 0 | 60 | 0 | 60 |
| Raw material NBR | T2n (30°C) (microsecond) | 220 | 220 | 260 | 260 | 330 | 330 |
| Measurement results for uncrosslinked form using pulsed NMR technique | T2n (150°C) (microsecond) | 3300 | 3600 | 3800 | 4000 | 4200 | 4600 |
| | fnn (150°C) | 0.31 | 0.34 | 0.36 | 0.38 | 0.37 | 0.41 |
| Crosslinking | | Crosslinked | Crosslinked | Crosslinked | Crosslinked | Crosslinked | Crosslinked |
| DMS measurement results | Minimum use temperature (°C) | -7.5 | -14.0 | -16.2 | -20.6 | -37.0 | -40.5 |
| Measurement results of dynamic viscoelasticity test | Deterioration start temperature (°C) | 143 | 152 | 127 | 152 | 123 | 143 |
| | E' (30°C) (MPa) | 2.8 | 17.8 | 2.9 | 20.0 | 2.2 | 21.1 |
| | E' (200°C) (MPa) | - | - | - | - | - | - |
| | tandelta (-10°C) | 133 | 0.90 | 0.92 | 0.41 | 0.21 | 0.13 |
| | tandelta (30°C) | 0.18 | 0.20 | 0.12 | 0.15 | 0.07 | 0.08 |
| | tandelta (200°C) | - | - | - | . | - | - |

As is clear from Tables 5 and 6, the following items were confirmed from Examples 1b to 6b according to the invention. Specifically, the deterioration start temperatures (200°C or more) of the rubber composition samples of Examples 1b to 6b according to the invention were higher than the deterioration start temperatures of the rubber composition samples of Comparative Examples 1b to 6b. Therefore, when using the rubber compositions of Examples 1b to 6b for a rubber section of a shim plate, the maximum usable temperature of the shim plate can be set at 200°C or more.

The rubber compositions of Examples 1b to 6b according to the invention had a dynamic modulus of elasticity (E') at 200°C of 10 MPa or more. This indicates that the rubber compositions of Examples 1b to 6b maintained high rigidity at a high temperature. Since the deterioration start temperatures of the rubber compositions of Comparative Examples 1b to 6b were 123 to 152°C, the dynamic modulus of elasticity (E') at 200°C of the rubber compositions of Comparative Examples 1b to 6b was not measured due to softening. The rubber compositions of Examples 1b to 6b according to the invention had a dynamic modulus of elasticity (E') at room temperature (30°C) of 25 MPa or more which is higher than those of the rubber compositions of Comparative Examples 1b to 6b. This indicates that the rubber compositions of Examples 1b to 6b had high rigidity at room temperature (30°C).

The rubber compositions of Examples 1b to 6b according to the invention had a loss tangent (tandelta) at 200°C of 0.05 or more. This indicates that the rubber compositions of Examples 1b to 6b maintained high attenuation characteristics at a high temperature. Since the deterioration start temperatures of the rubber compositions of Comparative Examples 1b to 6b were 123 to 152°C, the loss tangent (tandelta) at 200°C of the rubber compositions of Comparative Examples 1b to 6b was not measured due to softening. The rubber compositions of Examples 1b to 6b according to the invention had a loss tangent (tandelta) at a low temperature (-10°C) of 0.2 or more and a loss tangent (tandelta) at room temperature (30°C) of 0.1 or more. This indicates that the rubber compositions of Examples 1b to 6b had relatively high attenuation characteristics at these temperatures.

The rubber compositions of Examples 1b to 6b according to the invention had a minimum use temperature measured by the dynamic viscoelasticity test of -10°C or less. This indicates that the rubber compositions of Examples 1b to 6b can be used for a rubber section of a shim plate at a low temperature due to flexibility.

Although only some embodiments of this invention have been described in detail above, those skilled in the art will readily appreciate that many modifications are possible in the embodiments without materially departing from the novel teachings and advantages of this invention. Accordingly, all such modifications are intended to be included within the scope of the invention, as defined in the appended claims.

## Claims

1. A disc brake shim plate comprising:
a metal plate; and
a rubber section formed on at least one side of the metal plate;
the rubber section including a nitrile rubber and carbon nanofibers having an average diameter of 0.5 to 500 nm and dispersed in the nitrile rubber, the rubber section in uncrosslinked form having a first spin-spin relaxation time (T2n), measured at 150°C by a Hahn-echo method using a pulsed NMR technique with ¹H as an observing nucleus, of 100 to 3000 microseconds, and a fraction (fnn) of components having a second spin-spin relaxation time (T2nn) of less than 0.2; and
wherein the rubber section has a loss tangent (tandelta) at 200°C of 0.05 to 1.00.

2. A disc brake shim plate comprising:
a metal plate; and
a rubber section formed on at least one surface of the metal plate;
the rubber section including a nitrile rubber and carbon nanofibers having an average diameter of 0.5 to 500 nm and dispersed in the nitrile rubber, the rubber section in crosslinked form having a first spin-spin relaxation time (T2n), measured at 150°C by a Hahn-echo method using a pulsed NMR technique with ¹H as an observing nucleus, of 100 to 2000 microseconds, and a fraction (fnn) of components having a second spin-spin relaxation time (T2nn) of less than 0.2; and
wherein the rubber section has a loss tangent (tandelta) at 200°C of 0.05 to 1.00.

3. The disc brake shim plate as defined in claim 1 or 2,
wherein the rubber section has a dynamic modulus of elasticity (E') at 200°C of 10 to 1000 MPa.

4. The disc brake shim plate as defined in claim 1 or 2,
wherein the rubber section has a deterioration start temperature determined by thermomechanical analysis of 160 to 300°C.

5. The disc brake shim plate as defined in any one of claims 1 to 4, wherein the rubber section is formed on each side of the metal plate.

## Patentansprüche

1. Scheibenbremse-Abstandsscheibe, umfassend:
eine Metallplatte; und
einen Gummiabschnitt, der auf mindestens einer Seite der Metallplatte gebildet ist;
wobei der Gummiabschnitt einen Nitrilkautschuk und Kohlenstoff-Nanofaser, die einen durchschnittlichen Durchmesser von 0,5 bis 500 nm aufweisen und die in dem Nitrilkautschuk verteilt sind, aufweist, und wobei der Gummiabschnitt in unvernetzter Form eine erste Spin-Spin-Relaxationszeit (T2n) von 100 bis 3000 Mikrosekunden aufweist, die bei 150°C mit einem Hahn-EchoVerfahren unter Verwendung von einer gepulsten Kernspinresonanztechnik (NMR) mit ¹H als einem beobachteten Kern gemessen wurde, sowie eine Fraktion (fnn) von Komponenten aufweist, die eine zweite Spin-Spin-Relaxationszeit (T2nn) von weniger als 0,2 aufweisen; und
**dadurch gekennzeichnet ist, dass**
der Gummiabschnitt eine Verlusttangente (tan delta) bei 200°C von 0,05 bis 1,00 aufweist.

2. Scheibenbremse-Abstandsscheibe, umfassend:
eine Metallplatte; und
einen Gummiabschnitt, der aus mindestens einer Fläche der Metallplatte gebildet ist;
wobei der Gummiabschnitt einen Nitrilkautschuk und Kohlenstoff-Nanofaser, die einen durchschnittlichen Durchmesser von 0,5 bis 500 nm aufweisen und die in dem Nitrilkautschuk verteilt sind, aufweist, und wobei der Gummiabschnitt in vernetzter Form eine erste Spin-Spin-Relaxationszeit (T2n) von 100 bis 2000 Mikrosekunden aufweist, die bei 150°C mit einem Hahn-Echo Verfahren unter Verwendung von einer gepulsten Kernspinresonanztechnik (NMR) mit ¹H als einem beobachteten Kern gemessen wurde, sowie eine Fraktion (fnn) von Komponenten aufweist, die eine zweite Spin-Spin-Relaxationszeit (T2nn) von weniger als 0,2 aufweisen; und
**dadurch gekennzeichnet ist, dass**
der Gummiabschnitt eine Verlusttangente (tan delta) bei 200°C von 0,05 bis 1,00 aufweist.

3. Scheibenbremsen-Abstandsscheibe gemäß Anspruch 1 oder 2,
**dadurch gekennzeichnet, dass**
der Gummiabschnitt einen dynamischen Elastizitätsmodul (E') bei 200°C von 10 bis 1000 MPa aufweist.

4. Scheibenbremsen-Abstandsscheibe gemäß Anspruch 1 oder 2,
**dadurch gekennzeichnet dass**,
der Gummiabschnitt eine Alterungsanfangstemperatur aufweist, die durch thermomechanische Untersuchung von 160 bis 300°C bestimmt wurde.

5. Scheibenbremsen-Abstandsscheibe gemäß einem der Ansprüche 1 bis 4,
**dadurch gekennzeichnet dass**,
der Gummiabschnitt an jeder Seite der Metallplatte gebildet ist.

## Revendications

1. Plaque de compensation de frein à disque comprenant :
une plaque métallique ; et
une section en caoutchouc formée sur au moins un côté de la plaque métallique ;
la section en caoutchouc comprenant un caoutchouc nitrile et des nanofibres de carbone ayant un diamètre moyen de 0,5 à 500 nm et dispersées dans le caoutchouc nitrile, la section en caoutchouc sous forme non réticulée ayant un premier temps de relaxation spin-spin (T2n), mesuré à 150 °C par un procédé à échos de Hahn en utilisant une technique RMN pulsée avec ¹H en tant que noyau d'observation, de 100 à 3 000 microsecondes et une fraction (fnn) de composants ayant un deuxième temps de relaxation spin-spin (T2nn) inférieur à 0,2 ; et
dans laquelle la section en caoutchouc a une tangente d'angle de perte (tandelta) à 200 °C de 0,05 à 1,00.

2. Plaque de compensation de frein à disque comprenant :
une plaque métallique ; et
une section en caoutchouc formée sur au moins une surface de la plaque métallique ;
la section en caoutchouc comprenant un caoutchouc nitrile et des nanofibres de carbone ayant un diamètre moyen de 0,5 à 500 nm et dispersées dans le caoutchouc nitrile, la section en caoutchouc sous forme réticulée ayant un premier temps de relaxation spin-spin (T2n), mesuré à 150 °C par un procédé à échos de Hahn en utilisant une technique RMN pulsée avec ¹H en tant que noyau d'observation, de 100 à 2 000 microsecondes et une fraction (fnn) de composants ayant un deuxième temps de relaxation spin-spin (T2nn) inférieur à 0,2 ; et
dans laquelle la section en caoutchouc a une tangente d'angle de perte (tandelta) à 200 °C de 0,05 à 1,00.

3. Plaque de compensation de frein à disque selon la revendication 1 ou 2,
dans laquelle la section en caoutchouc a un module d'élasticité dynamique (E') à 200 °C de 10 à 1 000 MPa.

4. Plaque de compensation de frein à disque selon la revendication 1 ou 2,
dans laquelle la section en caoutchouc a une température de début de détérioration déterminée par analyse thermomécanique de 160 à 300 °C.

5. Plaque de compensation de frein à disque selon l'une quelconque des revendications 1 à 4, dans laquelle la section en caoutchouc est formée sur chaque côté de la plaque métallique.
